# EUROPÄISCHE PATENTSCHRIFT

(11) **EP 1 140 456 B1**
(45) Veröffentlichungstag und Bekanntmachung des Hinweises auf die Patenterteilung: **06.11.2002**
(21) Anmeldenummer: 98966688.8
(22) Anmeldetag: 30.12.1998
(51) Int. Cl.: B29C 45/18, B01F 5/06

(54) **VERFAHREN UND SPRITZGIESSMASCHINE ZUM HERSTELLEN VON SPRITZLINGEN, INSBESONDERE VON ZAHNBÜRSTENKÖRPERN ODER ZAHNBÜRSTEN**
METHOD AND INJECTION MOLDING MACHINE FOR PRODUCING INJECTION-MOLDED ARTICLES, ESPECIALLY TOOTHBRUSH BODIES OR TOOTHBRUSHES
PROCEDE ET MACHINE DE MOULAGE PAR INJECTION POUR PRODUIRE DES OBJETS MOULES PAR INJECTION, NOTAMMENT DES CORPS DE BROSSES A DENTS OU DES BROSSES A DENTS

(43) Veröffentlichungstag der Anmeldung: 10.10.2001
(73) Patentinhaber: Anton Zahoransky GmbH & Co., 79674 Todtnau (DE); MOLD-MASTERS LIMITED, Georgetown Ontario L7G 4X5 (CA)
(72) Erfinder: ZAHORANSKY, Ulrich, D-79104 Freiburg (DE); SENN, Alexander, D-79108 Freiburg (DE); GELLERT, Jobst, Ulrich, Georgetown, Ontario L7G 2X1 (CA); CHU, Simon, Mold-Masters Limited, Georgetown, Ontario L7G 4X5 (CA)
(74) Vertreter: Maucher, Wolfgang, Dipl.-Ing.
(86) Internationale Anmeldenummer: EP9808509
(87) Internationale Veröffentlichungsnummer: WO00040389

(56) Entgegenhaltungen:
- WO-A-88/00675
- DE-A- 2 223 659
- DE-A- 2 609 854
- DE-A- 19 728 733
- DE-C- 3 609 556
- PATENT ABSTRACTS OF JAPAN vol. 98, no. 5, 30. April 1998 (1998-04-30) & JP 10 006363 A (SUNSTAR INC), 13. Januar 1998 (1998-01-13)
- PATENT ABSTRACTS OF JAPAN vol. 18, no. 94 (M-1561), 16. Februar 1994 (1994-02-16) & JP 05 301254 A (NISSEI PLASTICS IND CO), 16. November 1993 (1993-11-16)
- PATENT ABSTRACTS OF JAPAN vol. 13, no. 223 (M-829), 24. Mai 1989 (1989-05-24) & JP 01 038217 A (NISSEI PLASTICS IND CO), 8. Februar 1989 (1989-02-08)

## Beschreibung

Die Erfindung bezieht sich auf ein Verfahren zum Herstellen von Spritzlingen, insbesondere von Zahnbürstenkörpern oder Zahnbürsten durch Spritzgießen, wobei Spritzmaterial von einem Vorratsbehälter über eine Spritzeinheit, insbesondere mittels eines Schneckenkolbenextruders oder dergleichen Fördereinrichtung zu den Formhöhlungen transportiert wird. Außerdem bezieht sich die Erfindung auf eine Spritzgießmaschine zur Durchführung des Verfahrens.

Zahnbürsten werden hinsichtlich der Bürstenkörper in mehreren, beispielsweise fünf verschiedenen Farben produziert. Dies könnte durch Einsatz einer entsprechenden Anzahl von Spritzgießmaschinen erfolgen, wobei jedoch außer dem hohen Aufwand auch nachteilig ist, daß wegen der in der Regel unterschiedlichen Stückzahlen der Bürstenkörper für die einzelnen Farben keine gleichmäßige Auslastung der Maschinen vorhanden wäre. In der Praxis werden deshalb bei der Produktion von Bürstenkörpern Farbwechsel vorgenommen, die aber umständlich und zeitaufwendig sind und auch einen nicht unerheblichen Produktionsausfall verursachen.
Die verschiedenen Farben werder entweder dem als Plastikgranulat vorliegenden Material für die Bürstenkörper trocken beigemischt und dieses Gemisch wird dann in dem Schneckenkolbenextruder oder dergleichen Fördereinrichtung erhitzt, verflüssigt und dann über Verteilerkanäle den einzelnen Formhohlräumen oder Formnestern während des Spritzvorganges zugeführt, oder aber es wird Flüssigfarbe verwendet, die bei einem Schneckenkolbenextruder in den Schneckenvorraum eingespritzt wird.
Bei einem Farbwechsel müssen alle Farbreste aus dem Schneckenkolbenextruder und den Verteilerkanälen gespült werden. Dies erfolgt, indem die neue Farbe eingebracht wird und mit dieser solange Bürstenkörper gespritzt werden, bis die letzten Reste der vorherigen Farbe ausgespült sind. Dies kann bis zu einer Stunde in Anspruch nehmen und die dabei produzierten Bürstenkörper bilden nicht verwendbaren Ausschuß, da sie neben der neuen auch Reste der alten Farbe enthalten. Auch ist zur Überwachung der Farbumstellung eine Bedienung der sonst automatisch arbeitenden Spritzgießmaschine erforderlich.
Der Aufwand für einen Farbwechsel ist so groß, daß er in der Praxis möglichst wenig durchgeführt wird. Es werden deshalb Bürstenkörper von jeweils einer Farbe auf Vorrat produziert. Bei einer über den Bedarf gehenden Produktion von Bürstenkörpern einer Farbe müssen jedoch große Mengen von Bürstenkörpern zwischengelagert werden, damit für das bei der Produktion von Bürsten nachfolgende Stopfen, Bürstenkörper aller vorgesehener Farben in dem dabei gewünschten Farbsortiment-Verhältnis zur Verfügung stehen. Dazu ist ein entsprechender Platzbedarf erforderlich. Problematisch ist dabei auch, daß Maßnahmen getroffen werden müssen, durch die über längere Zeit ein Verschmutzen der Bürstenkörper vermieden wird. Dies gilt insbesondere bei der Produktion von Zahnbürstenkörpern aus hygienischen Gründen.
Um das Zwischenlagern zu vermeiden, könnte man zwar die produzierten Bürstenkörperdirekt zum Stopfenweiterleiten, jedoch wäre dann eine noch aufwendiger Farbsortierung nach dem Stopfen oder nach dem Verpacken erforderlich.

Aufgabe der vorliegenden Erfindung ist es, ein Verfahren zu schaffen, mit dem bedarfsweise eine Umstellung der Produktion auf eine andere Ausführungsform zumindest hinsichtlich der Farbe der Spritzlinge mit geringem Aufwand und in kurzer Zeit möglich ist. Außerdem soll die Möglichkeit geschaffen werden, simultan unterschiedliche Spritzlinge mit eine Spritzgießmaschine herstellen zu können. Schließlich soll eine Spritzgießmaschine zur Durchführung des Verfahrens geschaffen werden.

Zur Lösung hinsichtlich des Verfahrens wird erfindungsgemäß vorgeschlagen, daß zum Herstellen von Spritzlingen wenigstens ein Zuschlagstoff innerhalb des Förderwegs des Spritzmaterials zu einer oder mehreren der Formhöhlungen in Strömungsrichtung nach der Spritzeinheit innerhalb einer Verteilerkanal-Anordnung dem Spritzmaterial zugegeben wird und daß in Strömungsrichtung hinter der Einmündung einer Zuschlagstoff-Zuführung das Spritzmaterial und der Zuschlagstoff gemischt werden.

Somit lassen sich mit einer einzigen Spritzgießmaschine gleichzeitig unterschiedliche Spritzlinge herstellen, was den Aufwand insgesamt erheblich reduziert und in vielen Anwendungsfällen eine Umstellung der Spritzgießmaschine auf andere Ausführungsformen von Spritzlingen entbehrlich macht. Das von der Spritzeinheit kommende Grund-Spritzmaterial wird auf dem Weg zu den einzelnen Formnestern oder zu Gruppen von Formnestern mit einem oder mehreren Zuschlagstoffen versehen, so daß je nach Zuschlagstoff unterschiedliche Spritzlinge simultan produziert werden können.
Bei einem Werkzeug mit üblicherweise einer Vielzahl von Formhöhlungen können dadurch gleichzeitig auch zum Beispiel farblich unterschiedliche Bürstenkörper gespritzt werden, so daß ganz nach Bedarf und gefordertem Farbsortiment dieses passend schon in der Spritzgießmaschine zusammengestellt werden kann.

Außerdem ist bei einer gegebenenfalls doch vorgesehenen Umstellung der Produktion auf Spritzlinge anderer Ausführungsform, der mit dem vorherigen Zuschlagstoff durchsetzte Bereich wesentlich kleiner und somit eine schnellere Umstellung möglich. Zumindest der Schneckenkolbenextruder oder dergleichen Fördereinrichtung ist dabei von dem einen Zuschlagstoff, zum Beispiel Farbe aufweisenden Bereich getrennt, so daß das darin befindliche Spritzmaterial bei einem Farbwechsel nicht durchgespült werden muß. Mit jeder Verlagerung der Zuführstelle der Farbe oder dergleichen Zuschlagstoff innerhalb des Spritzmaterial-Förderwegs mehr zu den Formhohlräumen hin, verringert sich der mit Zuschlagstoff beziehungsweise farblich durchsetzte Bereich und damit der Aufwand zum Durchspülen bei einem Farbwechsel.
Durch das sich nach dem Zusammenführen von Spritzmaterial und Zuschlagstoff erfolgende Mischen dieser Komponenten kann die Zuführung nahe dem jeweiligen Formhohlraum erfolgen.

Sind mehrere Zuführungen für Zuschlagstoff vorgesehen, so kann dieser über wenigstens eine Zuführung direkt zusammen mit dem Spritzmaterial in die Formhöhlungen eingegeben werden.
In diesem Fall könnte praktisch von Spritzzyklus zu Spritzzyklus ein Farbwechsel vorgenommen werden, ohne daß dazwischen Spülvorgänge erforderlich sind. Ohne Zusatzmaßnahmen zum Durchmischen von Farbe und Spritzmaterial lassen sich somit bei Direkteinspritzung oder Einspritzung der Farbe nahe dem jeweiligen Formhohlraum auch gezielte, farbliche Gestaltungen vornehmen, wobei die Bürstenkörper keine gleichmäßig durchgehende Farbe, sondern ein Farbmuster aufweisen. Die farbliche oder optische Gestaltung läßt sich auch durch Zuführung mehrerer Farben gleichzeitig oder von Farbe in Kombination mit anderen Zuschlagstoffen variieren.
Außer Farbe können auch andere Zuschlagstoffe, gegebenenfalls in Kombination, dem Spritzmaterial innerhalb des Förderwegs zu den Formhöhlungen in Strömungsrichtung nach der Spritzeinheit dem Spritzmaterial zugegeben und/oder direkt zusammen mit dem Spritzmaterial in die Formhöhlungen eingegeben werden. Vorzugsweise kommt dazu als Zuschlagstoff Farbe, vorzugsweise flüssige Farbe, Granulat, Pulver, Metallplättchen, Armierungs- oder Verstärkungsmaterial, Entformungsmittel, chemisch wirksame Zuschlagstoffe wie zum Beispiel Treibmittel, Härter, Weichmacher oder dergleichen infrage.
Mit Metallplättchen kann ein Glimmereffekt erzeugt und somit der Spritzling in seiner optischen Erscheinung, gegebenenfalls in Verbindung mit unterschiedlichen Farben variiert werden. Als Armierungs- oder Verstärkungsmaterial kann Fasermaterial, zum Beispiel Glas- oder Kohlefasern, außerdem Steinmehl, Talkum oder dergleichen verwendet werden.
Entformungsmittel dient zum besseren Entformen der Spritzlinge und es kann dazu Silikon eingesetzt werden.
Chemisch wirksame Zuschlagstoffe können zur Veränderung der Eigenschaften des Spritzmaterials eingesetzt werden, um zum Beispiel die Konsistenz des Spritzmaterials in erwünschter Weise zu beeinflussen. Ein solcher Zuschlagstoff kann beispielsweise ein Aktivator sein, um das Erstarren des Spritzmaterials zu beschleunigen. Ein Weichmacher kann insbesondere dann eingesetzt werden, wenn eine einen Bürstenkörper bereichsweise umhüllende Umspritzung aus gummielastischem Material vorgesehen ist.
Härter wird dann verwendet, wenn es sich bei dem Spritzmaterial um Zweikomponentenmaterial handelt.
Somit ergeben sich außer dem reduzierten Aufwand bei einem Wechsel der Produktion auf eine andere Ausführungsform der Spritzlinge, weitere Vorteile und auch erweiterte Anwendungen.
Die vorgenannten oder vergleichbare Zuschlagstoffe lassen sich durch die erfindungsgemäße Zuführung im Verlauf des Förderwegs, insbesondere nahe bei den Formhöhlungen überhaupt erst einsetzen, da sie praktisch unmittelbar wirksam werden und deshalb eine Zugabe in den Vorratsbehälter für das Spritzmaterial wegen des dann vorhandenen, langen Förderwegs bis zu der oder den Formhöhlungen ausscheidet.

Bei einer Vielzahl von in einem Spritzgießwerkzeug vorgesehenen Formhöhlungen sind diese gruppenweise über einen Kanal-Hauptverteiler oder mehrere Kanal-Unterverteiler mit der Spritzmaterial-Fördereinrichtung verbunden. Dabei besteht nach einer Ausführungsform der Erfindung sowohl die Möglichkeit, daß Zuschlagstoff zumindest in einen Kanalunterverteiler als auch in einen Kanalhauptverteiler einer Verteilerkanal-Anordnung eingegeben wird.
Wird als Zuschlagstoff Farbe bei dem Hauptverteiler zugeführt, werden alle angeschlossenen Formhöhlungen des Werkzeuges mit gleichfarbigem Spritzmaterial versorgt. Bei Zuführung der Farbe bei einem oder mehreren Unterverteilern lassen sich innerhalb des Spritzgießwerkzeuges gruppenweise farblich unterschiedliche Bürstenkörper herstellen.
Weiterhin besteht die Möglichkeit, Zuschlagstoff in eine an eine Formhöhlung angeschlossene Düse einzugeben.
Wird als Zuschlagstoff Farbe einem oder mehreren Unterverteilern, einer oder mehreren Düsen oder den Formhöhlungen direkt zugeführt, so ist je nach Anzahl der vorhandenen Formhöhlungen oder Gruppen von Formhöhlungen und auch abhängig von der Anzahl der gewünschten Farben nur noch in sehr großen zeitlichen Abständen ein Farbwechsel, unter Umständen überhaupt kein Farbwechsel mehr notwendig, so daß die damit verbundenen Probleme auch nicht mehr oder nur in ganz reduziertem Maße auftreten.
Nach einer Weiterbildung der Erfindung ist vorgesehen, daß Zuschlagstoff dosiert dem Spritzmaterial zugegeben wird. Durch Zugabe unterschiedlicher Zuschlagstoffmengen kann das Mischungsverhältnis insbesondere von Farbe mit z.B. weißem Spritzmaterial variiert werden und es lassen sich auch innerhalb einer Farbe unterschiedliche Farbtönungen erreichen.
Die Dosierung kann dabei durch zeitliches Variieren der Zugabe und/oder durch Verändern des Zuführdrucks erfolgen.

Die Erfindung bezieht sich auch auf eine Spritzgießmaschine zur Durchführung des erfindungsgemäßen Verfahrens. Diese Spritzgießmaschine weist ein Spritzgießwerkzeug mit einer Spritzgießform und eine Spritzeinheit insbesondere mit einem Schneckenkolbenextruder oder dergleichen Fördereinrichtung auf, wobei von der Spritzeinheit zu den einzelnen Formhöhlungen führende Verteiler- oder Zuführkanäle vorgesehen sind. Diese Spritzgießmaschine ist dadurch gekennzeichnet, daß an einen oder mehrere der Verteilerkanäle eine oder mehrere Zuführungen für wenigstens einen Zuschlagstoff angeschlossen sind und daß der jeweilige, mit einer Zuschlagstoff-Zuführung versehene Verteilerkanal in Strömungsrichtung hinter der Einmündung einer Zuschlagstoff-Zuführung wenigstens eine Mischeinrichtung aufweist.
Die wesentlichen mit dieser Spritzgießmaschine erzielten Vorteile sind vorstehend bereits anhand des erfindungsgemäßen Verfahrens beschrieben. Insbesondere sind durch diese Maßnahmen Umstellungen auf andere Ausführungsformen der Spritzlinge, zum Beispiel Farbwechsel mit wesentlich weniger Aufwand verbunden und schneller durchführbar. Bei Spritzgießwerkzeugen mit mehreren Gruppen von Formhohlräumen, wie dies bei der Herstellung kleiner Bürstenkörper, insbesondere von Zahnbürstenkörpern üblich ist, können gleichzeitig verschiedene, insbesondere verschiedenfarbige Bürstenkörper hergestellt werden und es ist bei einer Anzahl von Formhöhlungen oder Gruppen von Formhöhlungen entsprechend den gewünschten Farben oder Ausführungsformen der Bürstenkörper eine Umstellung der Spritzgießmaschine im üblichen Sinne sogar entbehrlich. Außerdem können die Eigenschaften der Spritzlinge durch unterschiedliche Zuschlagstoffe beeinflußt und/oder das Herstellen verbessert, insbesondere vereinfacht werden.
Die Mischeinrichtung sorgt für eine gute Durchmischung des Zuschlagstoffs und des Grund-Spritzmaterials und es ist dadurch auch bei Zuführungen des Zuschlagstoffs nahe dem Formhohlraum eine gute Durchmischung erzielbar.
Eine einfache Ausführungsform einer Mischeinrichtung sieht wenigstens eine durch eine Querschnittsveränderung, vorzugsweise durch eine Querschnittserweiterung gebildete Mischkammer vor. Eine solche Mischkammer hat den Vorteil, daß ein einfacher Aufbau vorhanden ist und keine störungen auftreten können.
Um die Durchmischung von Zuschlagstoff und Spritzmaterial noch zu verbessern, kann die Mündung der Zuschlagstoff-Zuführung bei dem Zuführkanal als Ringdüse ausgebildet sein. Dadurch tritt der Zuschlagstoff gleichzeitig an mehreren, umfänglich verteilten Stellen in den Zuführkanal mit dem Spritzmaterial ein, so daß hier schon eine intensive Vermischung stattfindet. Besonders in Kombination mit einer oder mehreren nachfolgenden Mischeinrichtungen, zum Beispiel einer Mischkammer, läßt sich auf kürzester Förderstrecke eine gute Durchmischung von Spritzmaterial und Zuschlagstoff erreichen.

Eine andere, vorteilhafte Ausführungsform sieht vor, daß ein Heißkanalverteiler zur Verarbeitung von Schmelzen, denen vor dem Einspritzen in die Formhöhlungen wenigstens ein Zuschlagstoff zugemischt wird, vorgesehen ist, der einen Schmelzekanal in dem wenigstens ein Zufuhrabschnitt für die Zuführung des Zuschlagstoffs vorgesehen ist, wenigstens einen Zuschlagstoffkanal der in den Zufuhrabschnitt des Schmelzekanals mündet, und wenigstens einen sich in Strömungsrichtung anschließenden Mischer aufweist, und daß der Mischer als Mischstrecke ausgebildet ist, die wenigstens zwei Streckenabschnitte umfaßt, deren Achsen nicht fluchtend zueinander ausgerichtet sind.
Der Vorteil dieser Ausführungsform besteht darin, daß die Ausbildung des Mischers als wenigstens zweiteilige und nicht fluchtende Mischstrecke eine äußerst flexible, an die Geometrie des Heißkanalverteilers angepaßte Anordnung des Mischers ermöglicht.
Die Ausbildung des Heißkanalverteilers als Hauptverteiler bringt den Vorteil, daß verschiedene mit dem Hauptverteiler verbundene Unterverteiler mit Schmelzen versorgt werden können, die mit verschiedenen Zuschlagstoffen vermischt sind. Dazu sind jeweils ein in den Zufuhrabschnitt mündender Zuschlagstoffkanal sowie ein Mischer in Strömungsrichtung hinter jeweils einer zu einem oder mehreren Unterverteilern führenden Verzweigung angeordnet.
Auf diese Weise können einzelne Unterverteiler oder Gruppen von Unterverteilern flexibel mit Schmelzen, denen verschiedene Zuschlagstoffe zugemischt sind, versorgt werden.

Eine noch flexiblere Versorgung ist möglich, wenn der Heißkanalverteiler als ein mit mehreren Heißkanaldüsen verbindbarer Unterverteiler ausgebildet ist. Mit Hilfe eines solchen Heißkanalverteilers können einzelne Gruppen von Heißkanaldüsen gezielt mit Schmelzen versorgt werden, denen unterschiedliche zuschlagstoffe zugemischt sind. Werden mehrere Mischer verwendet, so sind vorteilhafterweise die Länge und der Querschnitt der einzelnen Mischstrecken gleich. Dadurch werden balancierte Fließverhältnisse erzeugt, die wiederum in gleichmäßigen Füllund Nachdruckverhältnissen in jeder Kavität resultieren.

In einer weiteren vorteilhaften Ausführungsform der Erfindung ist die Austrittsöffnung eines ersten Abschnittes mit der Eintrittsöffnung eines zweiten Abschnittes der beiden Streckenabschnitte durch ein die Strömungsrichtung umlenkendes Teilstück des Schmelzkanals verbunden. Dadurch wird erreicht, daß der erste Abschnitt in einer Richtung durchströmbar ist, die im wesentlichen entgegengesetzt zu der Strömungsrichtung des zweiten Abschnittes ist. Durch Verwendung des umlenkenden Teilstückes wird in diesem Ausführungsbeispiel die nicht fluchtende Anordnung der beiden Streckenabschnitte verwirklicht. Durch geeignete Wahl des Umlenkwinkels können die beiden Streckenabschnitte der Verteilerform angepaßt werden und andere Einbauten, wie z.B. Heizdrähte oder Verschlußventile der Heißkanaldüsen berücksichtigt werden. Beträgt der Umlenkwinkel des Teilstückes 180°, wird die Mischstrecke schleifenförmig halbiert, so daß die beiden Streckenabschnitte parallel zueinander angeordnet sind. Auf diese Weise läßt sich ein äußerst kompakter Heißkanalverteiler konstruieren, der auf geringstem Raum einen Mischer mit hoher Mischleistung aufnimmt. In einer weiteren vorteilhaften Ausführungsform kann der Heißkanalverteiler aus wenigstens zwei horizontal übereinander angeordneten Ebenen aufgebaut sein, wobei der erste Streckenabschnitt in der unteren ersten Ebene und der zweite Streckenabschnitt in der oberen zweiten Ebene vorgesehen ist. Diese symmetrische Anordnung der beiden parallelen Streckenabschnitte erleichtert eine balancierte Kanalführung, d.h. eine Kanalführung mit gleichlangen Fließwegen.
Der Heißkanalverteiler kann entlang der beiden Ebenen in eine untere, eine mittlere und eine obere Lage geteilt sein, wobei in jeder Lage Nuten vorgesehen sind und wobei nach dem Verlöten der Lagen durch ein Vakuumdiffusionsverfahren die Nuten jeweils angrenzender Lagen eine obere und eine untere Hälfte des Schmelzekanals bilden.

Es hat sich als vorteilhaft erwiesen, wenn die beiden Streckenabschnitte als zwei statische Mischer ausgebildet sind, die auf kleinem Raum eine starke Vermischung der Schmelze mit dem Zuschlagstoff bewirken. Solche statischen Mischer sind zwar aus dem Katalog Misch- und Reaktionstechnik (1994) der Sulzer Chemtech GmbH für den Einsatz in Spritzgießmaschinen bekannt. Diese bekannten Mischer sollen jedoch nur zusätzlich zu einer durch einen Extruder bewirkten Vermischung der Schmelze mit Farbe die Schmelze hinsichtlich der Farbe weiter homogenisieren.

Um den Einbau der statischen Mischer in den Heißkanalverteiler zu vereinfachen, können die beiden statischen Mischer direkt in den Schmelzekanal vorzugsweise eingelötet sein. Dazu werden die statischen Mischer vor dem Verlöten der einzelnen Lagen in eine der Schmelzekanalhälften, die in jeder der Lagen ausgebildet ist, eingesetzt.

Bevorzugte statische Mischer umfassen jeweils mehrere schraubenförmig gewundene Ablenkbleche, die abwechselnd rechts- und linksdrehend hintereinander angeordnet sind, wobei jedes Ablenkblech zwei senkrecht zur Strömungsrichtung stehende Kanten aufweist, die jeweils mit der anliegenden Kante des benachbarten Ablenkbleches verbunden und gegenüber dieser Kante um einen bestimmten Winkel verdreht sind. Solche statischen Mischer teilen die sie durchströmende Schmelze und vermischen diese Teilströme wieder miteinander. Eine besonders gute Teilung und Vermischung wird dann erreicht, wenn die miteinander verbundenen Kanten um einen Winkel von etwa 90° zueinander verdreht sind. Die anliegenden Kanten benachbarter Ablenkbleche können vorteilhafterweise durch Punktschweißen miteinander verbunden werden.

Im Zufuhrabschnitt kann ein Endstück des Zuschlagstoffkanals in den Schmelzekanal koaxial hineinragen, wodurch ein Ringspalt zwischen der Außenwand des Endstückes und der Innenwand des Schmelzekanals für den Schmelzefluß ausgebildet ist. Dadurch wird vorteilhafterweise erreicht, daß der Zuschlagstoff mittig dem Schmelzefluß zugeführt wird, was die erwünschte gleichmäßige Vermischung der Schmelze mit dem Zuschlagstoff begünstigt. Der Durchmesser des Endstückes des Zuschlagstoffkanals kann kleiner als der Durchmesser des sich an das Endstück anschließenden Teiles des Zuschlagstoffkanals sein, wodurch vorteilhafterweise verhindert wird, daß Schmelze in das Endstück eintritt. Der Zuschlagstoffkanal kann mit einem Reservoir und einer Hochdruckpumpe verbunden sein, die aus dem Reservoir den zuzumischenden Zuschlagstoff in das Endstück des Zuschlagstoffkanals und weiter in den Schmelzekanal mit ausreichend hohem Druck pumpt.
Die Anordnung des Reservoirs und der Hochdruckpumpe außerhalb des Heißkanalverteilers ermöglicht eine einfache Wartung sowie einen schnellen und einfachen Zuschlagstoffwechsel. Vorteilhafterweise ist der mit der Hochdruckpumpe erzeugbare Druck dem im Schmelzekanal herrschenden Druck beim Einspritzen anpaßbar.

Das Endstück des Zuschlagstoffkanals kann zur Dosierung des Zuschlagstoffs durch ein Nadelventil verschlossen werden, das durch einen Solenoid beziehungsweise ein Magnetventil intermittierend steuerbar ist. Mit Hilfe des Nadelventils und des Solenoids ist eine feine Dosierung des Zuschlagstoffs möglich. Es hat sich als vorteilhaft herausgestellt, wenn der Solenoid das Nadelventil mit einer Frequenz von 30 bis 100 Zyklen/Sekunde betätigt und der Hub des Nadelventils auf 0,1 bis 0,01 mm begrenzt ist.

Zusätzliche Ausgestaltungen der Erfindung sind in den weiteren Unteransprüchen aufgeführt. Nachstehend ist die Erfindung mit ihren wesentlichen Einzelheiten anhand der Zeichnungen noch näher erläutert.
Es zeigt etwas schematisiert:
- Fig. 1: eine im Schnitt gehaltene Seitenansicht eines Spritzgießwerkzeugs mit Spritzeinheit,
- Fig. 2: eine Spritzeinheit mit einer angeschlossenen Verteilerkanal-Anordnung sowie im Bereich von Unterverteilern angeschlossenen Zuschlagstoffzuführungen,
- Fig. 3: eine Anordnung etwa vergleichbar mit der in Fig. 2 gezeigten, hier jedoch mit Zuschlagstoffzuführung bei den Düsen,
- Fig. 4: eine Verteilerkanalanordnung mit Zuschlagstoffzuführung bei einem Hauptverteiler und
- Fig. 5: eine Verteilerkanal-Anordnung mit Zuschlagstoffzuführung im Mündungsbereich einer an eine Formhöhlung angeschlossenen Düse.
- Fig. 6: schematisch ein Heißkanalsystem bestehend aus einem Hauptverteiler und zwei Unterverteilern, die jeweils mit zwei Gruppen von fünf Heißkanaldüsen verbunden sind, wobei der Hauptverteiler als erfindungsgemäßer Heißkanalverteiler ausgebildet ist;
- Fig. 7: ein Heißkanalsystem wie in Fig. 6, wobei die beiden Unterverteiler als erfindungsgemäße Heißkanalverteiler ausgebildet sind;
- Fig. 8: einen Querschnitt durch einen erfindungsgemäßen Unterverteiler, in dem eine Mischstrecke mit zwei statischen Mischern vorgesehen ist;
- Fig. 9: eine perspektivische Detailansicht eines der beiden statischen Mischer aus Fig. 8; und
- Fig. 10: einen Schnitt durch den erfindungsgemäßen Unterverteiler aus Fig. 8 entlang der Schnittlinie AA.

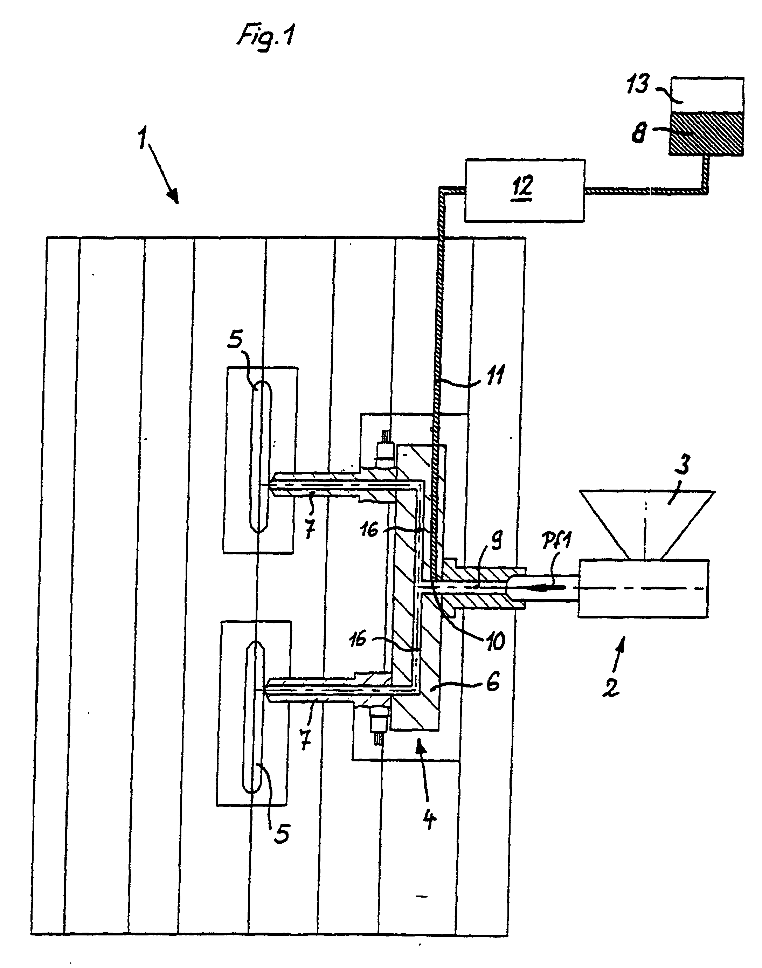

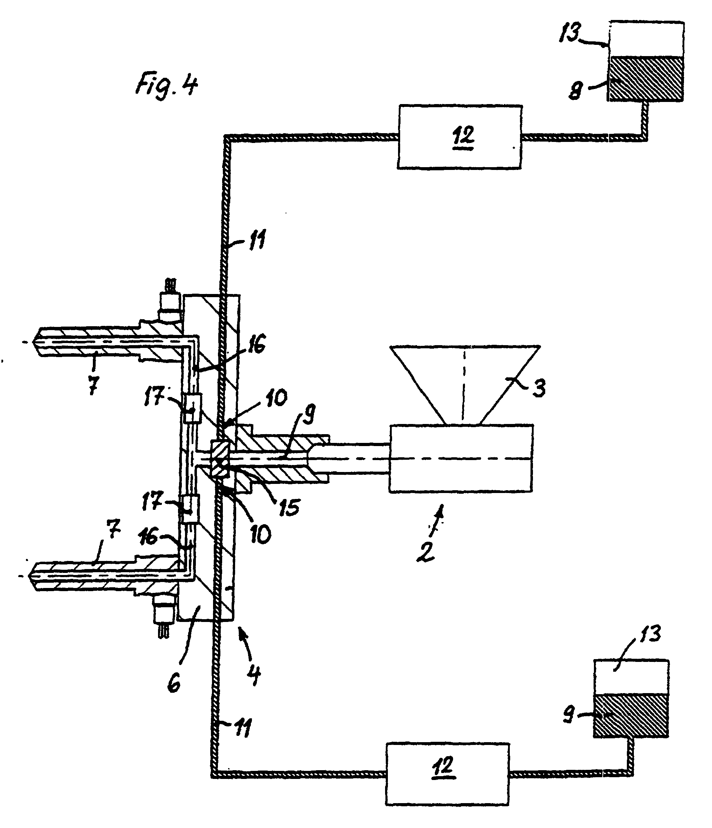

Von einer Spritzgießmaschine ist in Fig. 1 das Spritzgießwerkzeug 1 mit daran angeschlossener Spritzeinheit 2 erkennbar. Mit Hilfe der Spritzeinheit, die eine Fördereinrichtung vorzugsweise in Form eines Schneckenkolbenextruders sowie eine Spritzmaterialzuführung 3 aufweist, wird verflüssigtes Spritzmaterial über eine Verteilerkanal-Anordnung 4 Formhöhlungen 5 zugeführt. Die Zuführung erfolgt im vorliegenden Falle nach Fig. 1 über einen Hauptverteiler 6, von dem zu den einzelnen Formhöhlungen 5 Düsen 7 führen. Überlicherweise sind zum Herstellen von Zahnbürstenkörpern Heißkanalwerkzeuge vorgesehen, bei dem die in den Zuführ- bzw. Verteilerkanälen enthaltene Spritzmasse auf Spritztemperatur gehalten wird. Auch die Düsen 7 sind dann als sogenannte Heißkanaldüsen ausgebildet und mit einer Heizung versehen.
Bei den in den Figuren gezeigten Ausführungsbeispielen wird als Zuschlagstoff Farbe 8 zugeführt und im weiteren Verlauf der Beschreibung der Ausführungsbeispiele wird von einem solchen Zuschlagstoff ausgegangen, obgleich auch andere Zuschlagstoffe zum Variieren der Ausführungsform der Bürste oder des Bürstenkörpers infrage kommen, wie eingangs bereits beschrieben.
Bei dem in Fig. 1 gezeigten Ausführungsbeispiel wird innerhalb des Hautpverteilers 6 Farbe 8 zugeführt, mittels der das von der Spritzeinheit 2 kommende Spritzmaterial zum Herstellen farbiger Bürstenkörper eingefärbt wird. Die Farbzuführung erfolgt hier innerhalb des Hauptverteilers 6 und dabei in den Hauptzuführkanal 9 vor der Verzweigung zu den einzelnen Düsen 7. Das von der Spritzeinheit 2 gemäß der Pfeilrichtung Pf1 geförderte Spritzmaterial vermischt sich mit der aus der Farbzuführung 10 in den Hauptzuführkanal 9 eintretenden Farbe, wobei im weiteren Förderweg zu den Formhöhlungen eine genügende Durchmischung des Spritzmateriales erfolgt. Von wesentlicher Bedeutung ist hierbei, daß die Farbe nicht bereits im Bereich der Spritzeinheit zugegeben wird, so daß bei einem notwendigen Farbwechsel nur die stromabwärts hinter der Farb-Zuführungen 10 sich anschließenden Kanalabschnitte eingefärbte Spritzmasse enthalten ist, die bei dem Farbwechsel ausgespritzt und ausgespült werden müssen. Da die Zuführung der Farbe erste im Hauptzuführkanal 9 erfolgt, ist das durchzuspülende Kanalvolumen wesentlich reduziert. Die Farbzuführung 10, die bei einem der Kanäle einer Verteilerkanal-Anordnung 4, 4a mündet, umfaßt eine Zuführleitung 11, eine Pumpe 12 sowie einen Vorratsbehälter 13 für die Farbe 8. Die Pumpe 12 ist vorzugsweise als Förder- und Dosierpumpe ausgebildt, so daß vorgebbare Mengen von Farbe dem Spritzmaterial zumischbar sind.
An der Einmündung der Farbzuführung 10 in einen Kanal der Verteilerkanal-Anordnung 4, beispielsweise den Hauptzuführkanal 9, kann ein in Fig.1 nicht dargestellter Sperrschieber 15 (vergl. Fig.4) oder dergleichen Ventil vorgesehen sein, damit die Farbzuführung bedarfsweise, zum Beispiel während der Nachdruckphase verschlossen werden kann. Beispielsweise kann ein Rückschlagventil vorgesehen sein, das bei höherem Druck in der Verteilerkanal-Anordnung als in der Farb-Zuführung 10 die Farb-Zuführung schließt. Der Sperrschieber oder dergleichen kann auch als Dosierventil ausgebildet sein, mittels dem eine dosierte Abgabe von Farbe möglich ist.
Außer einer kontinuierlichen Dosierung kann die Farbe auch intermittierend zugegeben werden, so daß Bürstenkörper mit einem entsprechenden Farbmuster erzeugt werden können.
Erwähnt sei noch, daß die Farbe mit etwa gleicher Temperatur wie das Spritzmaterial zugeführt wird, so daß gegenseitige, ungünstige Beeinflussungen der beiden Materialien vermieden werden. Dazu kann eine separate Temperiereinrichtung für die Farbe vorgesehen sein, oder aber die Heizeinrichtung für die Heißkanalzuführung wird auch gleichzeitig mitverwendet um die Farbe auf entsprechende Temperatur zu bringen.

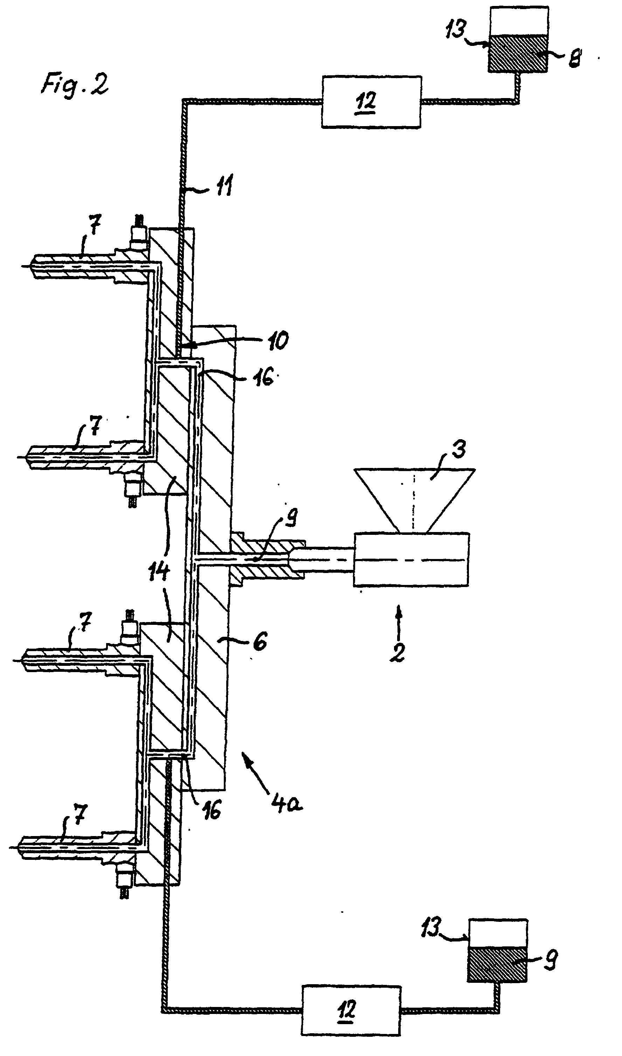

Fig. 2 zeigt eine Verteilerkanal-Anordnung 4a bei der der Hauptverteiler 6 an Kanalunterverteiler 14 angeschlossen ist. In Fig. 2 sind an den Hauptverteiler 6 zwei Unterverteiler 14 angeschlossen, jedoch könnten in der Zeichenebene parallel versetzt auch noch mehr Unterverteiler, beispielsweise in vier Ebenen mit jeweils zwei Unterverteilern sechzehn Formhöhlungen 5 angeschlossen sein. Wie gut in Fig. 2 erkennbar, sind die Farb-Zuführungen 10 in diesem Ausführungsbeispiel bei jedem Unterverteiler 14 an den vom Hauptverteiler 6 kommenden Kanal 16 angeschlossen, so daß jeweils zwei gleichfarbige Bürstenkörper gespritzt werden können. In einer Ausführungsform mit insgesamt sechzehn Formhöhlungen 5 würde dies bedeuten, daß gleichzeitig pro Spritzschuß 16 Bürstenkörper mit acht verschiedenen Farben herstellbar sind.

In Fig. 4 erfolgt die Farbzuführung zu der Verteilerkanal-Anordnung 4 beim Hauptverteiler 6 an der gleichen Stelle wie in Fig. 1 gezeigt in den Hauptzuführkanal 9. Es sind hierbei jedoch zwei Farbzuführungen 10 vorgesehen, mit denen wechselweise unterschiedliche Farbe zugeführt werden kann. Dazu sind die Austrittsöffnungen der Farb-Zuführungen 10 wechselweise mit Hilfe eines Sperrschiebers 15 verschließ- bzw. öffenbar.
Für eine intensive Farbdurchmischung ist es zweckmäßig, insbesondere wenn sich die Farbzuführung 10 nahe der Formhöhlung 5 befindet, eine oder mehrere Mischeinrichtungen im Zuführweg vorzusehen.
Fig. 4 zeigt in den vom Hauptzuführkanal 9 abgezweigten Nebenkanälen 16 angeordneten Mischkammern 17, die durch Querschnittserweiterungen gebildet sind. Solche Querschnittserweiterungen führen dazu, daß das durchströmende Spritzmaterial verwirbelt und damit besser mit der beigemengten Farbe vermischt wird.
Anstatt dieser besonders einfachen, aber wirksamen Mischeinrichtungen könnten auch andere Mischeinrichtungen, beispielsweise eine Zahnradpumpe gegebenenfalls ohne Antrieb oder dergleichen vorgesehen sein.
Als weitere Maßnahme für eine gute Durchmischung von Spritzmaterial und zugeführter Farbe, kann die Mündung der Farb-Zuführung 10 bei dem Verteiler- oder Zuführkanal als Ringdüse ausgebildet sein. Eine solche Ringdüse kann auch am Umfang verteilt mehrere Austrittsöffnungen haben, so daß die Farbe beim Zuführen schon über den Querschnitt des Spritzmaterialstranges verteilt in diesen eingegeben wird, so daß auf kürzestem Weg bereits eine gute Durchmischung stattfindet.

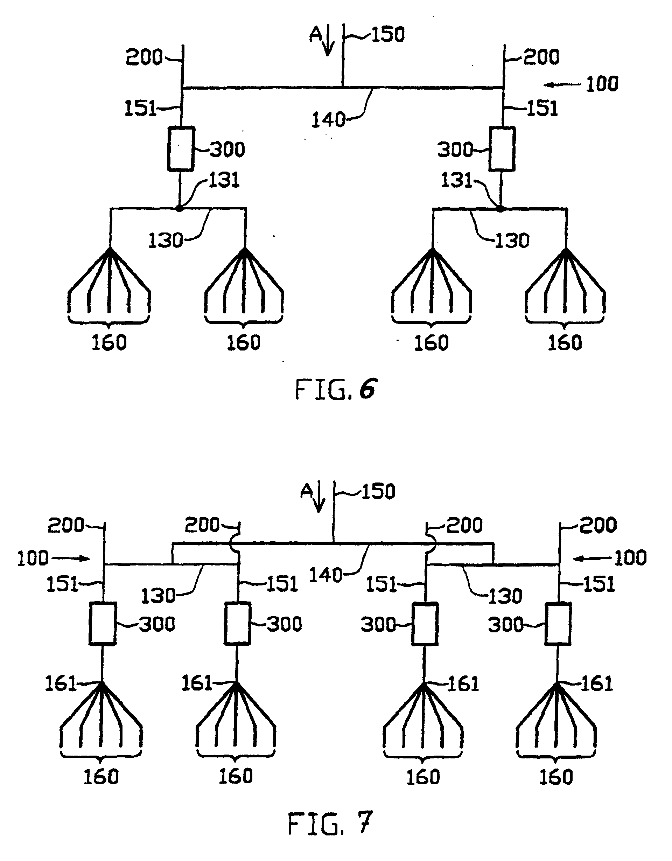

Den Fig. 6 und 7 ist zu entnehmen, daß ein Schmelzekanal 150 im Hauptverteiler 140 sich zu zwei Unterverteilern 130 verzweigt, die wiederum mit jeweils zwei Gruppen von fünf Heißkanaldüsen 160 verbunden sind. In der Fig. 6 ist der Hauptverteiler 140 als erfindungsgemäßer Heißkanalverteiler 100 ausgebildet. Dazumünden zwei Zuschlagstoffkanäle 200 in zwei Zufuhrabschnitte 151 des Schmelzekanals 150, an die sich in Strömungsrichtung A jeweils ein Mischer 300 anschließt. Der Schmelzekanal 150 führt nach diesem Mischer 300 zu jeweils einem Unterverteiler 130, der wiederum mit jeweils zwei Gruppen zu je fünf Heißkanaldüsen 160 verbunden ist. Mit dieser Anordnung können zwei Unterverteiler 130 mit Schmelzen 101 versorgt werden, denen im Hauptverteiler 140 unterschiedliche Farben 102 als Zuschlagstoff zugemischt werden.

Eine größere Flexibilität bei der Zumischung verschiedener Farben 102 als Beispiel für Zuschlagstoffe kann dadurch erreicht werden, indem, wie in Fig. 7 gezeigt, die Unterverteiler 130 als erfindungsgemäße Heißkanalverteiler 100 ausgebildet sind. Dazu werden die Zufuhrabschnitte 151, in die die Zuschlagstoffkanäle 200 münden sowie die Mischer 300 unmittelbar vor der Verzweigung 161 zu den einzelnen Heißkanaldüsen 160 angeordnet. Auf diese Weise kann jede Gruppe der Heißkanaldüsen 160 getrennt mit einer Schmelze 101 versorgt werden, der jeweils eine andere Farbe 102 oder dergleichen Zuschlagstoff zugemischt ist.

Um in allen Bereichen der Hauptverteiler 140 bzw. Unterverteiler 130 balancierte Fließverhältnisse zu erhalten, ist es vorteilhaft jeweils gleiche Mischer 300, also Mischer 300, deren Mischstrecken die gleiche Länge und den gleichen Querschnitt aufweisen, einzusetzen.

Für das folgende Ausführungsbeispiel ist als zuzumischende Farbe 102 eine Flüssigfarbe gewählt.

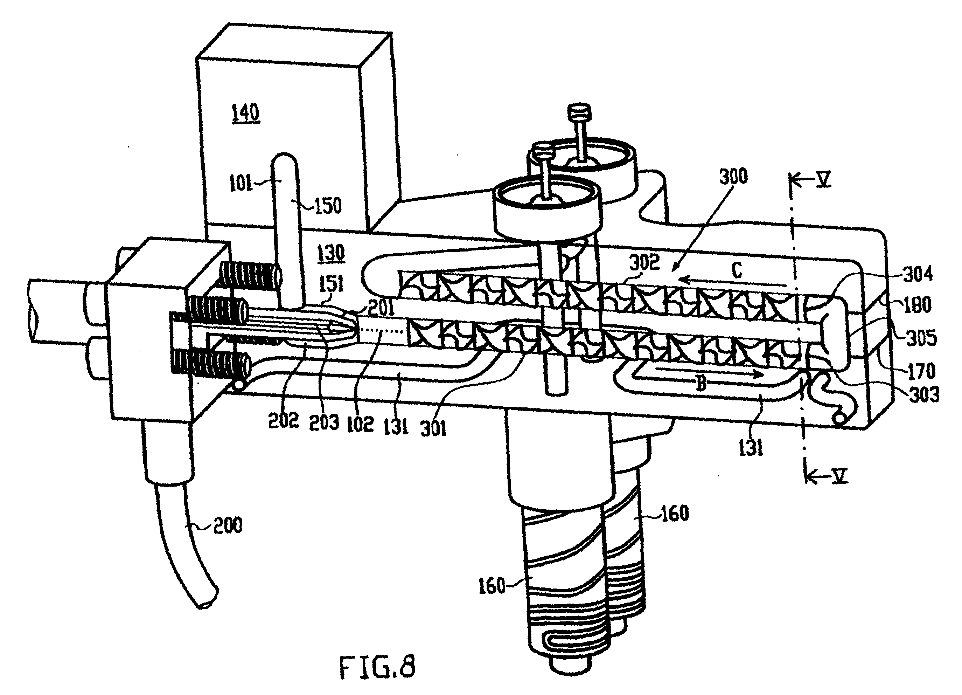

Wie in der Fig. 8 gezeigt, führt ein Schmelzekanal 150 aus dem Hauptverteiler 140 kommend in den Unterverteiler 130. Im Zufuhrbereich 151 mündet in den Schmelzekanal 150 ein Endstück 201 des Zuschlagstoffkanals 200. Zwischen der Außenwandung des Endstückes 201 und der Innenwandung des Schmelzekanals 150 ist ein Ringspalt 202 ausgebildet. Durch diesen Ringspalt 202 strömt die Schmelze 101 entlang des Endstückes 201. Aus einer nicht gezeigten Öffnung an der Spitze des Endstückes 201 wird mit Hilfe eines Nadelventils 203 fein dosiert die Farbe 102 in die Schmelze 101 eingespritzt. Die Farbe 102 wird als dünner Strang in der Mitte der Schmelze 101 mitgeführt, bis die Schmelze 101 und die Farbe 102 in den Mischer 300 eintreten. Nach Durchströmen des Mischers 300 sind die Schmelze 101 und die Farbe 102 homogen vermischt und werden den Heißkanaldüsen 160 zugeführt, die die mit der Farbe 102 vermischte Schmelze 101 in die Spritzgußwerkzeuge einspritzen.

In dem in Fig. 8 gezeigten Ausführungsbeispiel ist ein Mischer 300 gezeigt, der als Mischstrecke mit zwei Streckenabschnitten 301,302 ausgebildet ist, deren Achsen nicht fluchtend zueinander ausgerichtet sind. Insbesondere ist eine Austrittsöffnung 303 des ersten Steckenabschnitts 301 mit einer Eintrittsöffnung 304 des zweiten Streckenabschnitts 302 durch ein um 180° umlenkendes Teilstück 305 des Schmelzekanals 150 verbunden. Auf diese Weise sind die beiden Steckenabschnitte 301,302 parallel zueinander angeordnet. Die Schmelzemischung durchströmt den ersten Steckenabschnitt 301 in der Pfeilrichtung B, während der zweite Streckenabschnitt 302 in der Pfeilrichtung C von der Schmelzemischung durchströmt wird. Die Durchströmungsrichtungen B, C der beiden Streckenabschnitte 301,302 sind, wie in Fig. 8 zu sehen, entgegengesetzt gerichtet. Die besondere Anordnung der beiden parallelen Streckenabschnitte 301,302 in zwei übereinander angeordneten Ebenen 170,180 gestattet eine symmetrische Führung des Schmelzekanals 150 zu den beiden in Fig. 8 gezeigten Heißkanaldüsen 160 und zu zwei in der Fig. 8 nicht gezeigten Heißkanaldüsen, die bezüglich der Schnittebene symmetrisch zu den beiden gezeigten Heißkanaldüsen 160 angeordnet sind. In dem in Fig. 8 dargestellten Ausführungsbeispiel ist der erste Streckenabschnitt 301 in der unteren Ebene 170 und der zweite Steckenabschnitt 302 in der darüberliegenden Ebene 180 angeordnet. Es ist aber auch durchaus denkbar, den ersten Streckenabschnitt 301 in der oberen Ebene 180 anzuordnen und dann die Schmelzemischung nach unten in den in der unteren Ebene 170 liegenden zweiten Streckenabschnitt 302 zu führen. Von diesem zweiten Streckenabschnitt 302 aus wird die mit der Farbe 102 vermischte Schmelze 101 ähnlich wie in Fig. 8 den Heißkanaldüsen 160 zugeführt.

Neben der in Fig. 8 gezeigten bevorzugten Ausführungsform der Erfindung sind natürlich auch andere Ausführungsformen denkbar, bei denen die beiden Streckenabschnitte 301,302 nicht fluchtend zueinander ausgerichtet sind. So könnte z.B. ein die beiden Streckenabschnitte 301,302 verbindendes um 180° umlenkendes Teilstück 305 des Schmelzekanals 150 verwendet werden, das um einen bestimmten Winkel verdreht ist. Somit liegen die beiden Streckenabschnitte 301,302 zwar immer noch in den Ebenen 170, 180 sind aber nicht mehr parallel, sondern unter einem bestimmten Winkel zueinander angeordnet. Dieser Winkel könnte sich z.B. nach der Form des Unterverteilers 130 bzw. nach Einbauten, wie z.B. Heizdrähten 131, richten.
Der Fig. 8 ist weiter zu entnehmen, daß die beiden Steckenabschnitte 301,302 als statische Mischer 450 ausgebildet sind.

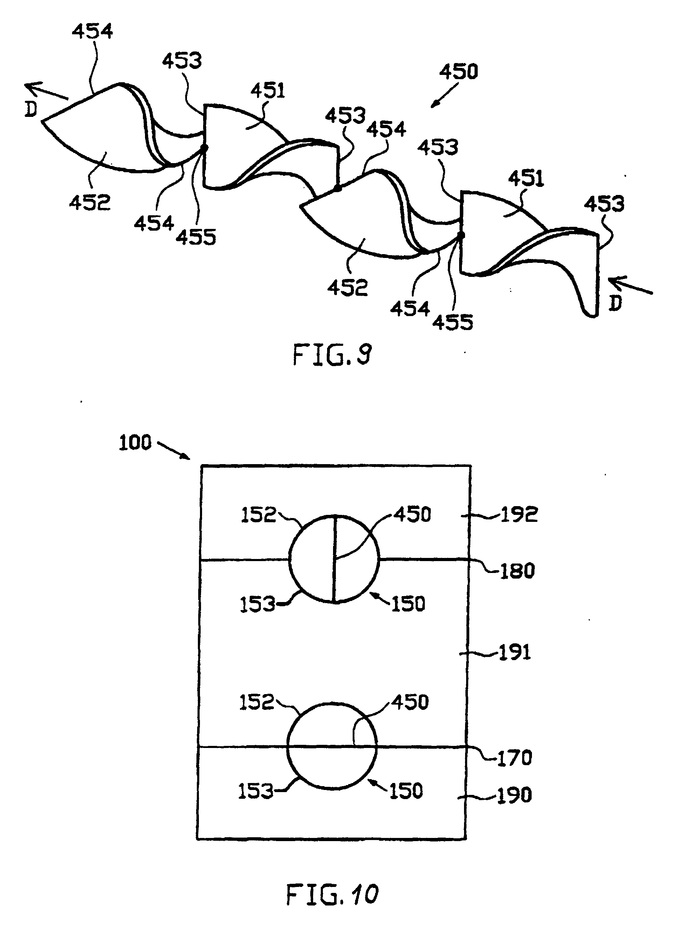

Der Aufbau der beiden in Fig. 8 gezeigten statischen Mischer 450 ist in der Fig. 9 dargestellt. Dort ist zu sehen, daß ein solcher statischer Mischer 450 aus mehreren schraubenförmig gewundenen Ablenkblechen 451,452 zusammengesetzt ist. Dabei sind abwechselnd rechts- und linksdrehend gewundene Ablenkbleche 451,452 hintereinander angeordnet. Jedes Ablenkblech 451 weist zwei senkrecht zur Durchströmungsrichtung D stehende Kanten 453 auf. Diese Kanten 453 sind jeweils mit der anliegenden ebenfalls senkrecht zur Durchströmungsrichtung D stehenden Kante 454 des benachbarten Ablenkbleches 452 verbunden und gegenüber dieser Kante 454 um einen bestimmten Winkel verdreht. In diesem Ausführungsbeispiel sind die miteinander verbundenen Kanten 453, 454 um einen Winkel von etwa 90° zueinander verdreht. Andere Verdrehwinkel sind natürlich möglich. Die anliegenden Kanten 453, 454 benachbarter Ablenkbleche 451,452 sind durch Punktschweißen an den Punkten 455 miteinander verbunden.

In der Fig. 10 ist gezeigt, daß die beiden statischen Mischer 450 direkt in den Schmelzekanal 150 eingelötet sind, was durch den mehrteiligen Aufbau des Heißkanalverteilers 100 ermöglicht wird. Dieser ist, wie in der Fig. 10 gezeigt, entlang der beiden Ebenen 170,180 in eine untere, eine mittlere und eine obere Lage 190,191,192 geteilt. In jeder Lage 190,191,192 sind Nuten vorgesehen, die nach dem Zusammenfügen der Lagen 190,191,192 eine obere und eine untere Hälfte 152,153 des Schmelzekanals 150 bilden. Das Verbinden der Lagen 190,191,192 erfolgt durch Verlöten mit Hilfe eines Vakuumdiffusionsverfahren.

Zum Einbau werden die statischen Mischer 450 vor dem Verbinden der Lagen 190,191,192 in jeweils eine Nuthälfte 152 oder 153 eingesetzt. Das Verlöten der statischen Mischer erfolgt zusammen mit dem Verlöten der einzelnen Lagen 190,191,192.

Selbstverständlich können noch weitere statische Mischer in paralleler Anordnung über oder neben in den Fig. 8 und 10 gezeigten statischen Mischern 450 vorgesehen sein. Der geteilte Aufbau des Heißkanalverteilers 100, also die Anzahl seiner Lagen, richtet sich dann nach der Anzahl der verwendeten statischen Mischern unter Berücksichtugung des oben beschriebenen Aufbauprinzips.

Obwohl in diesem Ausführungsbeispiel nur statische Mischer 450 mit Ablenkblechen 451, 452 dargestellt sind, können natürlich auch andere statische Mischer, wie z.B. statische Mischer mit Stegen, verwendet werden.

Die Dosierung der Farbe 102 oder dergleichen Zuschlagstoff erfolgt, wie der Fig. 8 zu entnehmen, mit Hilfe eines Nadelventils 203, das das Endstück 201 verschließt und öffnet. Dabei ist die Spitze des in Längsrichtung bewegbaren Nadelventils 203 einer in Fig. 8 nicht gezeigten Öffnung des Endstückes 201 angepaßt. Durch die Längsbewegung des Nadelventiles 203 kann diese Öffnung von der Spitze verschlossen oder freigegeben werden. Da die Hochdruckpumpe im Komponetenkanal 200 und somit in dessen Endstück 201 einen permanenten Druck von etwa 1000 bar bis 1500 bar erzeugt, wird bei geöffnetem Nadelventil 203 eine bestimmte Menge der Farbe 102 in die Schmelze 101 eingespritzt. Zur Dosierung der Farbe 102 kann das Nadelventil 203 von einem Solenoid 204 intermittierend gesteuert werden. Zusammen mit einer nicht gezeigten Rückholfeder, die das Nadelventil 203 entweder öffnet oder verschließt, bewirkt der Solenoid 204 die Längsbewegung des Nadelventiles 203. Der Frequenzbereich, in dem der Solenoid 204 arbeitet, liegt zwischen 30 und 100 Zyklen/sec. Der Hub, um den das Nadelventil 203 bewegt wird, ist auf 0,1 bis 0,01 mm begrenzt.

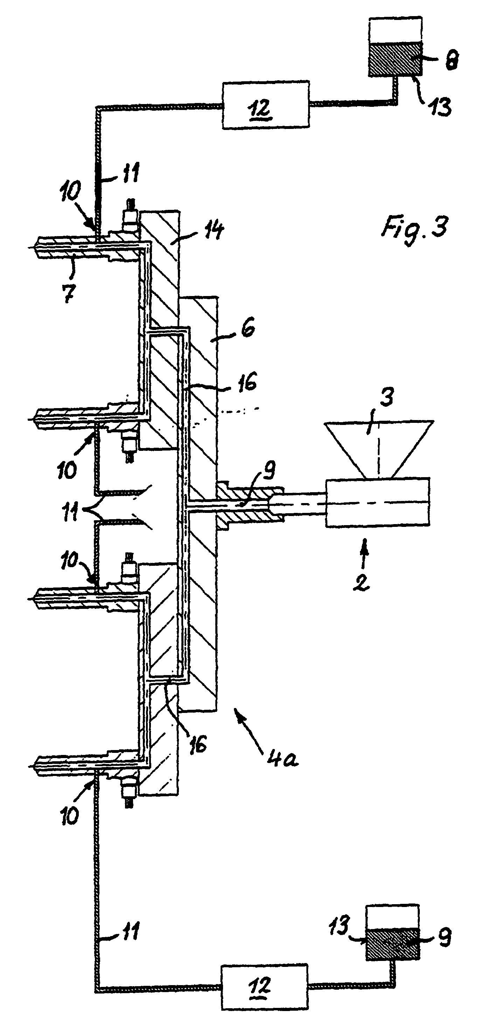

Fig. 3 zeigt eine etwa Fig. 2 entsprechende Verteilerkanal-Anordnung 4a, wobei Zuschlagstoffzuführungen 10 zu jeder Heißkanal-Düse 7 führen. Dadurch läßt sich in jeder einer Düse 7 zugeordneten Formhöhlung 5 (vgl. Fig. 1) ein bezüglich zum Beispiel der Farbe wählbarer Bürstenkörper spritzen. Auch hierbei könnten noch im Restweg zu den Formhöhlungen 5 Maßnahmen zu besseren Durchmischung von Spritzmaterial und Farbe oder dergleichen vorgesehen sein.

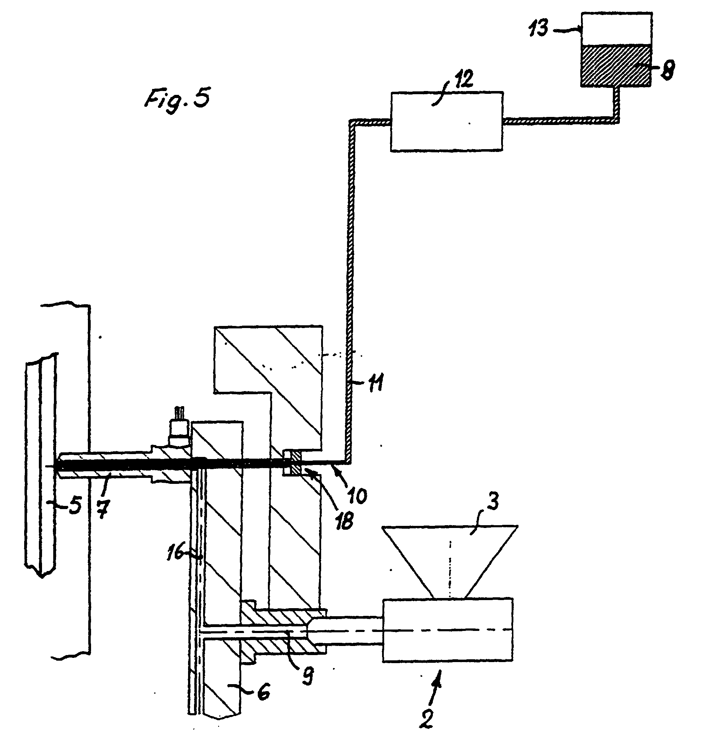

Bei der in Fig. 5 gezeigten Anordnung erfolgt die Zuschlagstoffzuführung beim formhöhlungsseitigen Ende der Heißkanal-Düse 7 und somit direkt in die Formhöhlung 5. In diesem Ausführungsbeispiel erfolgt die Zuschlagstoffzuführung koaxial innerhalb des Düsenkanales und es ist hier zur dosierten Abgabe von Zuschlagstoff eine Nadelverschlußdüse 18 vorgesehen. Zwar ist bei direkter Zuschlagstoffeinspritzung in die Formhöhlung 5 keine homogene Durchmischung möglich, es lassen sich damit jedoch Bürstenkörper insbesondere farblich gestalten, wobei Mischfarben oder Schlierzonen entstehen. Durch intermittierte Zugabe können auch Bürstenkörper mit mehreren Farbzonen hergestellt werden.
Eine solche farbliche Gestaltung kann auch bei einer zum Spritzmaterialeintritt bei den Formhöhlungen 5 beabstandeten Farb-Zuführungen 10 realisiert werden, wenn der Abstand der Einmündung einer Farb-Zuführung von der sich anschließenden Formhöhlung auf das Volumen des Spritzlings und des vorgesehenen Farbbereich abgestimmt ist. Auch damit lassen sich bei intermittierter Zugabe von Farbe Farbzonenbereiche innerhalb eines Bürstenkörpers herstellen.

Erwähnt sei noch, daß das über die Spritzeinheit 2 zugeführte Spritzmaterial selbst schon eine Grundfarbe, beispielsweise weiß aufweisen kann, so daß mit zusätzlich eingebrachten Farben auch Mischfarben realisiert werden können. Überlicherweise handelt es sich bei dem Spritzgrundmaterial jedoch um farbloses, meist transparentes Material.

## Patentansprüche

1. Verfahren zum Herstellen von Spritzlingen, insbesondere von Zahnbürstenkörpern oder Zahnbürsten durch Spritzgießen, wobei Spritzmaterial von einen Vorratsbehälter (3) über eine Spritzeinheit (2), insbesondere mittels eines Schneckenkolbenextruders oder dergleichen Fördereinrichtung über eine Verteilerkanal-Anordnung (4) mit Verteiler- oder Zuführkanälen zu Formhöhlungen (5) transportiert wird, und wobei dem Spritzmaterial in Strömungsrichtung nach der Spritzeinheit (2) wenigstens ein Zuschlagstoff zugegeben wird, **dadurch gekennzeichnet, daß** der Zuschlagstoff direkt innerhalb der Verteiler- oder Zuführkanäle der Verteilerkanal-Anordnung in zumindest einen an die Spritzeinheit (2) angeschlossenen Kanal-Hauptverteiler (6) und/oder einen Kanal-Unterverteiler (14) der Verteilerkanal-Anordnung (4) und/oder in eine an eine Formhöhlung (5) angeschlossene Düse (7) eingegeben und dem Spritzmaterial zugegeben wird und daß in Strömungsrichtung hinter der Einmündung einer Zuschlagstoff-Zuführung (10) das Spritzmaterial und der Zuschlagstoff gemischt werden.

2. Verfahren nach Anspruch 1, **dadurch gekennzeichnet, daß** als Zuschlagstoff Farbe (8), vorzugsweise flüssige Farbe, Granulat, Pulver, Metallplättchen. Armierungs- oder Verstärkungsmaterial, Entformungsmittel, chemisch wirksame Zuschlagstoffe wie zum Beispiel Treibmittel, Härter, Weichmacher oder dergleichen einzeln oder in Kombination zugeführt werden.

3. Verfahren nach Anspruch 1 oder 2, **dadurch gekennzeichnet, daß** Zuschlagstoff (8) an mehreren Stellen der Verteilerkanal-Anordnung (4) eingegeben wird.

4. Verfahren nach einem der Ansprüche 1 bis 3, **dadurch gekennzeichnet, daß** Zuschlagstoff (8) dosiert dem Spritzmaterial zugegeben wird.

5. Verfahren nach einem der Ansprüche 1 bis 4, **dadurch gekennzeichnet, daß** die Zuführung des Zuschlagstoffs (8) während der Nachdruckphase beim Spritzvorgang blockiert wird.

6. Verfahren nach einem der Ansprüche 1 bis 5, **dadurch gekennzeichnet, daß** der Zuschlagstoff (8) dem Spritzmaterial mit etwa gleicher Temperatur wie die des Spritzmaterials zugeführt wird.

7. Verfahren zum Herstellen einer Verteilerkanal-Anordnung (4), insbesondere eines Heißkanalverteilers (100) für eine Spritzgießmaschine mit folgenden Schritten:
Bereitstellen einer ersten Lage (192) mit einer Hälfte (152) eines Verteiler- oder Zuführkanalabschnittes (150);
Bereitstellen einer zweiten Lage (191) mit der anderen Hälfte (153) des Verteiler- oder Zuführkanalabschnittes (150);
Bereitstellen einer Mischeinrichtung mit einem Mischer (450);
Anordnen des Mischers (450) in dem Verteiler- oder Zuführkanal (150) zwischen der ersten und zweiten Lage (192, 191); und Verbinden der ersten Lage (192) und der zweiten Lage (191).

8. Spritzgießmaschine zum Herstellen von Spritzlingen, insbesondere von Zahnbürstenkörpern, mit einem Spritzgießwerkzeug (1), einer Spritzeinheit (2), Formhöhlungen (5), einer Verteilerkanal-Anordnung (4) mit Verteiler- oder Zuführkanälen (150), die Spritzmaterial zwischen der Spritzeinheit (2) und den einzelnen Formhöhlungen (5) führen, und mit mindestens einer Mischeinrichtung (450) für das Spritzmaterial, und mit wenigstens einem Anschluß für eine Zuschlagstoff-Zuführung, insbesondere zur Durchführung des Verfahrens nach einem der Ansprüche 1 bis 7, **dadurch gekennzeichnet, daß** die Mischeinrichtung und die Zuschlagstoff-Zuführung in die Verteilerkanal-Anordnung (4,4a,100) integriert sind, daß die Mischeinrichtung Teil eines Verteiler- oder Zuführkanales (150) der Verteilerkanal-Anordnung (4) ist und daß die Zuführung(en) für Zuschlagstoff (8) an einen an die Spritzeinheit (2) angeschlossenen Kanal-Hauptverteiler (6) und/oder einen Kanal-Unterverteiler (14) und/oder an eine in eine Formhöhlung mündende Düse (7) angeschlossen ist (sind).

9. Spritzgießmaschine nach Anspruch 8, **dadurch gekennzeichnet, daß** eine Zuschlagstoff-Zuführung (10) beim Austritt einer in eine Formhöhlung mündende Düse (7) vorgesehen ist und daß dazu vorzugsweise die Zuführung koaxial innerhalb des Düsenkanals geführt ist und am Düsenaustrittsende mündet.

10. Spritzgießmaschine nach Anspruch 8 oder 9, **dadurch gekennzeichnet, daß** die Zuführungen (10) für Zuschlagstoff (8) verschließbar sind, vorzugsweise mittels Sperrschiebern (15).

11. Spritzgießmaschine nach einem der Ansprüche 8 bis 10, **dadurch gekennzeichnet, daß** der Sperrschieber (15) als Dosierventil für den Zuschlagstoff (8) ausgebildet ist.

12. Spritzgießmaschine nach einem der Ansprüche 8 bis 11, **dadurch gekennzeichnet, daß** bei mehreren Zuführungen für Zuschlagstoff (8) wenigstens eine direkt an eine Formhöhlung (5) angeschlossen ist.

13. Spritzgießmaschine nach einem der Ansprüche 8 bis 12, **dadurch gekennzeichnet, daß** die Mischeinrichtung wenigstens eine durch eine Querschnittsveränderung, vorzugsweise durch eine Querschnittserweiterung gebildete Mischkammer (17) aufweist.

14. Spritzgießmaschine nach einem der Ansprüche 8 bis 13, **dadurch gekennzeichnet, daß** ein Heißkanalverteiler (100) zur Verarbeitung von Schmelzen (101), denen vor dem Einspritzen in die Formhöhlungen wenigstens ein Zuschlagstoff zugemischt wird, vorgesehen ist, der einen Schmelzekanal (150), in dem wenigstens ein Zufuhrabschnitt (151) für die Zuführung des Zuschlagstoffs (102) vorgesehen ist, wenigstens einen Zuschlagstoffkanal (200), der in den Zufuhrabschnitt (151) des Schmelzekanals (150) mündet, und wenigstens einen sich in Strömungsrichtung anschließenden Mischer (300) aufweist, und daß der Mischer (300) als Mischstrecke ausgebildet ist, die wenigstens zwei Streckenabschnitte (301,302) umfaßt, deren Achsen nicht fluchtend zueinander ausgerichtet sind.

15. Spritzgießmaschine nach Anspruch 14, **dadurch gekennzeichnet, daß** der Heißkanalverteiler (100) als ein mit mehreren Unterverteilern (130) verbindbarer Hauptverteiler (140) ausgebildet ist, dessen Schmelzekanal (150) sich zu den einzelnen Unterverteilern (130) hin verzweigt und der in den Zufuhrabschnitt (151) mündende Zuschlagstoffkanal (200) sowie der Mischer (300) in Strömungsrichtung hinter jeweils einer zu einem oder mehreren Unterverteilern (130) führenden Verzweigung (131) angeordnet sind.

16. Spritzgießmaschine nach Anspruch 14, **dadurch gekennzeichnet, daß** der Heißkanalverteiier (100) als ein mit mehreren Heißkanaldüsen (160) verbindbarer Unterverteiler (130) ausgebildet ist, dessen Schmelzekanal (150) sich zu den einzelnen Heißkanaldüsen (160) hin verzweigt und der in den Zufuhrabschnitt (151) mündende Zuschlagstoffkanal (200) sowie der Mischer (300) in Strömungsrichtung hinter einer zu den Heißkanaldüsen (160) führenden Verzweigung (161) angeordnet sind.

17. spritzgießmaschine nach Anspruch 15 oder 16, **dadurch gekennzeichnet, daß** bei Verwendung mehrerer Mischer (300) die Länge und der Querschnitt der einzelnen Mischstrecken zur Erzeugung balancierter Fließverhältnisse gleich sind.

18. Spritzgießmaschine nach einem der Ansprüche 14 bis 17, **dadurch gekennzeichnet, daß** die Austrittsöffnung (303) eines ersten Abschnittes (301) mit der Eintrittsöffnung (304) eines zweiten Abschnittes (302) der beiden Streckenabschnitte (301,302) durch ein die Strömungsrichtung umlenkendes Teilstück (305) des Schmelzekanals (150) verbunden ist, wodurch der erste Abschnitt (301) in einer Richtung durchströmbar ist, die im wesentlichen entgegengesetzt zur Durchströmungsrichtung des zweiten Abschnittes (302) ist.

19. Spritzgießmaschine nach Anspruch 18, **dadurch gekennzeichnet, daß** die Austrittsöffnung (303) des ersten Streckenabschnittes (301) mit der Eintrittsöffnung (304) des zweiten Streckenabschnittes (302) durch ein um 180° umlenkendes Teilstück (305) des Schmelzekanals (150) verbunden ist, wodurch die beiden Streckenabschnitte (301,302) der Mischstrecke parallel zueinander angeordnet sind.

20. Spritzgießmaschine nach Anspruch 19, **dadurch gekennzeichnet, daß** der Heißkanalverteiler (100) aus wenigstens zwei horizontal übereinander angeordneten Ebenen (170, 180) aufgebaut ist, wobei der erste Streckenabschnitt (301) in der unteren ersten Ebene (170) und der zweite Streckenabschnitt (302) in der oberen zweiten Ebene (180) vorgesehen ist.

21. Spritzgießmaschine nach Anspruch 20, **dadurch gekennzeichnet, daß** der Heißkanalverteiler (100) entlang der beiden Ebenen (170,180) in eine untere, eine mittlere und eine obere Lage (190,191,192) geteilt ist, wobei in jeder Lage (190,191,192) Nuten vorgesehen sind und wobei nach dem Verlöten der Lagen (190,191,192) durch ein Vakuumdiffusionsverfahren die Nuten jeweils angrenzender Lagen (190,191) und (191,192) eine obere und eine untere Hälfte (152,153) des Schmelzekanals (150) bilden.

22. Spritzgießmaschine nach einem der vorangegangenen Ansprüche, **dadurch gekennzeichnet, daß** der erste und der zweite Streckenabschnitt (301,302) jeweils als statischer Mischer (450) ausgebildet sind.

23. Spritzgießmaschine nach Anspruch 22, **dadurch gekennzeichnet, daß** die beiden statischen Mischer (450) in die untere oder obere Hälfte (152,153) des Schmelzekanals (150) eingesetzt und direkt in den Schmelzekanal (150) vzw. eingelötet sind.

24. Spritzgießmaschine nach wenigstens einem der Ansprüche 22 und 23, **dadurch gekennzeichnet, daß** die beiden statischen Mischer (450) jeweils mehrere schraubenförmig gewundene Ablenkbleche (451,452) umfassen, die abwechselnd rechtsund linksdrehend hintereinander angeordnet sind, wobei jedes Ablenkblech (451) zwei senkrecht zur Durchströmungsrichtung stehende Kanten (453) aufweist, die jeweils mit der anliegenden Kante (454) des benachbarten Ablenkbleches (452) verbunden und gegenüber dieser Kante (454) um einen bestimmten Winkel verdreht sind.

25. Spritzgießmaschine nach Anspruch 24, **dadurch gekennzeichnet, daß** die miteinander verbundenen Kanten (453,454) um einen Winkel von etwa 90° zueinander verdreht sind.

26. Spritzgießmaschine nach Anspruch 24 oder 25, **dadurch gekennzeichnet, daß** die anliegenden Kanten (453,454) benachbarter Ablenkbleche (451,452) durch Punktschweißen miteinander verbunden sind.

27. Spritzgießmaschine nach Anspruch 14, **dadurch gekennzeichnet; daß** im Zufuhrabschnitt (151) ein Endstück (201) des Zuschlagstoffkanals (200) in den Schmelzekanal (150) koaxial hineinragt und ein Ringspalt (202) zwischen der Außenwand des Endstückes und der Innenwand des Schmelzekanals (150) für den Schmelzefluß ausgebildet ist.

28. Spritzgießmaschine nach Anspruch 27, **dadurch gekennzeichnet, daß** der Durchmesser des Endstückes (201) des Zuschlagstoffkanals (200) kleiner als der Durchmesser des sich an das Endstück (201) anschließenden Teiles des Zuschlagstoffkanals (200) ist.

29. Spritzgießmaschine nach Anspruch 14, **dadurch gekennzeichnet, daß** der Zuschlagstoffkanal (200) mit einem Reservoir und einer Hochdruckpumpe verbunden ist, die aus dem Reservoir den zuzumischenden Zuschlagstoff (102) in das Endstück (201) des Zuschlagstoffkanals (200) und weiter in den Schmelzekanal (150) mit ausreichend hohem Druck pumpt.

30. Spritzgießmaschine nach Anspruch 29, **dadurch gekennzeichnet, daß** der mit der Hochdruckpumpe erzeugbare Druck mindestens so hoch ist, wie der im Schmelzekanal (150) herrschende Druck beim Einspritzen.

31. Spritzgießmaschine nach Anspruch 30, **dadurch gekennzeichnet, daß** der mit der Hochdruckpumpe erzeugbare Druck zwischen 1000 bar und 1500 bar beträgt.

32. Spritzgießmaschine nach Anspruch 29, **dadurch gekennzeichnet, daß** das Endstück (201) des Zuschlagstoffkanals (200) zur Dosierung des Zuschlagstoffs (102) durch ein Nadelventil (203) verschließbar ist, das durch einen Solenoid (204) beziehungsweise ein Magnetventil intermittierend steuerbar ist.

33. Spritzgießmaschine nach Anspruch 32, **dadurch gekennzeichnet, daß** der Solenoid (204) das Nadelventil (203) mit einer Frequenz von 30 bis 100 Zyklen/sec betätigt.

34. Spritzgießmaschine nach Anspruch 32 oder 33, **dadurch gekennzeichnet, daß** der Hub des Nadelventiles (203) auf 0,1 bis 0,01 mm begrenzt ist.

35. Spritzgießmaschine nach einem der Ansprüche 8 bis 34, **dadurch gekennzeichnet, daß** innnerhalb eines Verteilerkanals der Abstand der Einmündung einer Zuschlagstoff-Zuführung (10) von der sich anschließenden Formhöhlung, auf das Volumen des Spritzlings und den vorgesehenen Zuschlagstoffbereich innerhalb eines Bürstenkörpers abgestimmt ist.

36. Spritzgießmaschine nach einem der Ansprüche 8 bis 35, **dadurch gekennzeichnet, daß** für den Zuschlagstoff (8) eine Temperiereinrichtung, vorzugsweise mittels eines bei der Zuschlagstoff-Zuführung (10) angeordneten Heizeinsatzes vorgesehen ist.

37. Spritzgießmaschine nach einem der Ansprüche 8 bis 36, **dadurch gekennzeichnet, daß** einer oder mehrere Verteilerkanal-Zweige jeweils eine oder mehrere Zuschlagstoff-Zuführungen (10) aufweisen.

38. Spritzgießmaschine nach einem der Ansprüche 8 bis 37, **dadurch gekennzeichnet, daß** mehrere Zuschlagstoff-Zuführungen (10) in einen zu einer Formhöhlung (5) führenden Kanal, gegebenenfalls an in Strömungsrichtung gleichem Bereich münden und daß diese Zuschlagstoff-Zuführungen (10) wahlweise verschließbar sind.

39. Spritzgießmaschine nach einem der Ansprüche 8 bis 38, **dadurch gekennzeichnet, daß** die Mündung der Zuschlagstoff-Zuführung (10) bei dem Verteilerkanal als Ringdüse ausgebildet ist.

40. Spritzgießmaschine nach einem der Ansprüche 8 bis 39, **dadurch gekennzeichnet, daß** die Zuschlagstoff-Zuführung (10) eine Zuführleitung (11), eine vorzugsweise durch eine Pumpe (12) gebildete Fördereinrichtung sowie einen Zuschlagstoff-Vorratsbehälter (13) aufweist.

41. Spritzgießmaschine nach einem der Ansprüche 8 bis 40, **dadurch gekennzeichnet, daß** als Zuschlagstoff Farbe (8), vorzugsweise flüssige Farbe, Granulat, Pulver, Metallplättchen, Armierungs- oder Verstärkungsmaterial, Entformungsmittel, chemisch wirksame Zuschlagstoffe wie zum Beispiel Treibmittel, Härter, Weichmacher oder dergleichen vorgesehen sind.

42. spritzgießmaschine nach einem der Ansprüche 8 bis 41, **dadurch gekennzeichnet, daß** die Mischeinrichtung eine erste Lage (192) mit einer Hälfte (152) eines Verteiler- oder Zuführkanalabschnitts (150) und eine zweite Lage (191) mit der anderen Hälfte (153) des Verteiler- oder Zuführkanalabschnitts (150) umfasst, und die Mischeinrichtung einen zwischen der ersten und zweiten Lage (192,191) angeordnen Mischer (450) aufweist und die erste und die zweite Lage (192,191) miteinander verbunden sind.

## Claims

1. Process for producing injection moulded articles, particularly toothbrush bodies or toothbrushes, by injection moulding, in which the injecting material is transported from a storage container (3) through an injection unit (2), especially by means of a plunger-type screw extruder or similar conveyor via a distribution channel arrangement (4) with distribution or supply channels, to moulding cavities (5), and wherein at least one additive is added to the injecting material after the injection unit (2) in the direction of flow, **characterised in that** the additive is placed directly inside the distribution or supply channels of the distribution channel arrangement in at least one main distribution channel (6) connected to the injection unit (2) and/or a subsidiary distribution channel (14) of the distribution channel arrangement (4) and/or in a nozzle (7) connected to a moulding cavity (5) and is added to the injecting material, and **in that** the injecting material and the additive are mixed together downstream of the discharge outlet of an additive supply device (10) in the direction of flow.

2. Process according to claim 1, **characterised in that** a dye (8), preferably a liquid dye, granules, powder, metal flakes, reinforcing or strengthening material, mould release agents, chemically active additives such as, for example, propellants, hardeners, plasticisers or the like, are added singly or in combination as the additive.

3. Process according to claim 1 or 2, **characterised in that** the additive (8) is added at a plurality of points along the distribution channel arrangement (4).

4. Process according to one of claims 1 to 3, **characterised in that** the additive (8) is added to the injecting material in metered amounts.

5. Process according to one of claims 1 to 4, **characterised in that** the supply of additive (8) is blocked during the dwell pressure phase of the injection process.

6. Process according to one of claims 1 to 5, **characterised in that** the additive (8) is fed into the injecting material at about the same temperature as the injecting material.

7. Process for producing a distribution channel arrangement (4), particularly a hot distribution channel (100) for an injection moulding machine, comprising the following steps:
preparing a first layer (192) with one half (152) of a distribution or supply channel section (150); preparing a second layer (191) with the other half (153) of the distribution or supply channel section (150); preparing a mixing device with a mixer (450); arranging the mixer (450) in the distribution or supply channel (150) between the first and second layers (192, 191); and
joining together the first layer (192) and the second layer (191).

8. Injection moulding machine for producing injection moulded articles, particularly toothbrush bodies, with an injection moulding tool (1), an injection unit (2), moulding cavities (5), a distribution channel arrangement (4) with distribution or supply channels (150) which convey injecting material between the injection unit (2) and the individual moulding cavities (5), and with at least one mixing device (450) for the injecting material, and with at least one connection for an additive supply device, particularly for carrying out the process according to one of claims 1 to 7, **characterised in that** the mixing device and the additive supply device are integrated in the distribution channel arrangement (4, 4a, 100), **in that** the mixing device is part of a distribution or supply channel (150) of the distribution channel arrangement (4) and **in that** the supply device(s) for additive (8) is or are connected to a main distribution channel(6) connected to the injection unit (2) and/or a subsidiary distribution channel (14) and/or to a nozzle (7) opening into a moulding cavity.

9. Injection moulding machine according to claim 8, **characterised in that** an additive supply device (10) is provided at the exit from a nozzle (7) opening into a moulding cavity and **in that**, for this purpose, the supply device preferably extends coaxially inside the nozzle channel and emerges at the outlet end of the nozzle.

10. Injection moulding machine according to claim 8 or 9, **characterised in that** the supply devices (10) for the additive (8) can be closed off, preferably by means of locking valves (15).

11. Injection moulding machine according to one of claims 8 to 10, **characterised in that** the locking valve (15) is constructed as a metering valve for the additive (8).

12. Injection moulding machine according to one of claims 8 to 11, **characterised in that** when there are a plurality of supply devices for additive (8) at least one is connected directly to a moulding cavity (5).

13. Injection moulding machine according to one of claims 8 to 12, **characterised in that** the mixing device has at least one mixing chamber (17) formed by a change in cross section, preferably by an enlarged cross section.

14. Injection moulding machine according to one of claims 8 to 13, **characterised in that** a hot distribution channel (100) is provided for processing melts (101) into which at least one additive is mixed before being injected into the moulding cavities, this hot distribution channel having a melt channel (150) in which is provided at least one supply section (151) for supplying the additive (102), at least one additive channel (200) which opens into the supply section (151) of the melt channel (150), and at least one mixer (300) adjacent thereto in the direction of flow, and **in that** the mixer (300) is constructed as a mixing stage comprising at least two portions (301, 302) the axes of which are not in alignment with each other.

15. Injection moulding machine according to claim 14, **characterised in that** the hot distribution channel (100) is constructed as a main distributor (140) capable of being connected to a plurality of subsidiary distributors (130), the melt channel (150) of which branches off towards the individual subsidiary distributors (130), and the additive channel (200) opening into the supply section (151) and the mixer (300) are each arranged downstream, in the direction of flow, from a branch (131) leading to one or more subsidiary distributors (130).

16. Injection moulding machine according to claim 14, **characterised in that** the hot distribution channel (100) is constructed as a subsidiary distributor (130) capable of being connected to a plurality of hot channel nozzles (160), the melt channel (150) of which branches off towards the individual hot channel nozzles (160), and the additive channel (200) opening into the supply section (151) and the mixer (300) are each arranged downstream, in the direction of flow, from a branch (161) leading to the hot channel nozzles (160).

17. Injection moulding machine according to claim 15 or 16, **characterised in that** when a plurality of mixers (300) are used the length and cross section of the individual mixing stages are equal, in order to produce balanced flow conditions.

18. Injection moulding machine according to one of claims 14 to 17, **characterised in that** the outlet opening (303) of a first portion (301) is connected to the inlet opening (304) of a second portion (302) of the two stage portions (301, 302) by a section (305) of the melt channel (150) which deflects the direction of flow, as a result of which material can flow through the first portion (301) in a direction which is substantially opposed to the direction of flow of the second portion (302).

19. Injection moulding machine according to claim 18, **characterised in that** the outlet opening (303) of the first stage portion (301) is connected to the inlet opening (304) of the second stage portion (302) by a section (305) of the melt channel (150) which deflects the direction of flow through 180°, as a result of which the two stage portions (301, 302) of the mixing stage are arranged parallel to each other.

20. Injection moulding machine according to claim 19, **characterised in that** the hot distribution channel (100) is constructed from at least two planes (170, 180) arranged horizontally one above the other, the first stage portion (301) being provided in the first, lower plane (170) and the second stage portion (302) being provided in the second, upper plane (180).

21. Injection moulding machine according to claim 20, **characterised in that** the hot distribution channel (100) is subdivided along the two planes (170, 180) into a bottom, a middle and a top layer (190, 191, 192), with grooves provided in each layer (190, 191, 192) and wherein, after the layers (190, 191, 192) have been welded together by a vacuum diffusion process the grooves in adjacent layers (190, 191) and (191, 192) form an upper and lower half (152, 153) of the melt channel (150).

22. Injection moulding machine according to one of the preceding claims, **characterised in that** the first and second stage portions (301, 302) are each constructed as static mixers (450).

23. Injection moulding machine according to claim 22, **characterised in that** the two static mixers (450) are inserted in the bottom or top half (152, 153) of the melt channel (150) and are preferably welded directly into the melt channel (150).

24. Injection moulding machine according to at least one of claims 22 and 23, **characterised in that** the two static mixers (450) each comprise a plurality of helically wound deflector fins (451, 452) arranged one behind the other, rotating alternately to the right and to the left, each deflector fin (451) having two edges (453) arranged perpendicularly to the direction of flow which are connected to the adjoining edge (454) of the adjacent deflector fin (452) and are turned through a specific angle relative to this edge (454).

25. Injection moulding machine according to claim 24, **characterised in that** the edges (453, 454) which are joined together are rotated through an angle of about 90° relative to each other.

26. Injection moulding machine according to claim 24 or 25, **characterised in that** the adjoining edges (453, 454) of adjacent deflector fins (451, 452) are joined together by spot welding.

27. Injection moulding machine according to claim 14, **characterised in that** in the supply section (151) an end portion (201) of the additive channel (200) projects coaxially into the melt channel (150) and an annular gap (202) is formed between the outer wall of the end portion and the inner wall of the melt channel (150) for the flow of melt.

28. Injection moulding machine according to claim 27, **characterised in that** the diameter of the end portion (201) of the additive channel (200) is smaller than the diameter of the part of the additive channel (200) adjoining the end portion (201).

29. Injection moulding machine according to claim 14, **characterised in that** the additive channel (200) is connected to a reservoir and a high pressure pump which pumps the additive (102) which is to be mixed in from the reservoir into the end portion (201) of the additive channel (200) and on into the melt channel (150) at sufficiently high pressure.

30. Injection moulding machine according to claim 29, **characterised in that** the pressure that can be generated with the high pressure pump is at least as high as the pressure prevailing in the melt channel (150) during the injection moulding process.

31. Injection moulding machine according to claim 30, **characterised in that** the pressure that can be generated with the high pressure pump is between 1000 bar and 1500 bar.

32. Injection moulding machine according to claim 29, **characterised in that** in order to meter the additive (102) the end portion (201) of the additive channel (200) can be closed off by a needle valve (203) which can be actuated intermittently by a solenoid (204) or a magnetic valve.

33. Injection moulding machine according to claim 32, **characterised in that** the solenoid (204) actuates the needle valve (203) at a frequency of 30 to 100 cycles per second.

34. Injection moulding machine according to claim 32 or 33, **characterised in that** the travel of the needle valve (203) is limited to 0.1 to 0.01 mm.

35. Injection moulding machine according to one of claims 8 to 34, **characterised in that** inside a distribution channel the spacing of the discharge outlet of an additive supply device (10) from the adjacent moulding cavity is adapted to the volume of the injection moulded article and the intended content of additive within a brush body.

36. Injection moulding machine according to one of claims 8 to 35, **characterised in that** a temperature controller is provided for the additive (8), preferably using a heating insert arranged in the additive supply device (10).

37. Injection moulding machine according to one of claims 8 to 36, **characterised in that** one or more distribution channel branches each have one or more additive supply devices (10).

38. Injection moulding machine according to one of claims 8 to 37, **characterised in that** a plurality of additive supply devices (10) open into a channel leading to a moulding cavity (5), optionally in the same area in the direction of flow, and that these additive supply devices (10) may be closed off selectively.

39. Injection moulding machine according to one of claims 8 to 38, **characterised in that** the discharge outlet of the additive supply device (10) is constructed as an annular nozzle in the distribution channel.

40. Injection moulding machine according to one of claims 8 to 39, **characterised in that** the additive supply device (10) has a supply line (11), a conveyor, preferably in the form of a pump (12), and a storage container (13) for the additive.

41. Injection moulding machine according to one of claims 8 to 40, **characterised in that** a dye (8), preferably a liquid dye, granules, powder, metal flakes, reinforcing or strengthening material, mould release agents, chemically active additives such as, for example, propellants, hardeners, plasticisers or the like, are provided as the additive.

42. Injection moulding machine according to one of claims 8 to 41, **characterised in that** the mixing device comprises a first layer (192) with one half (152) of a distribution or supply channel section (150) and a second layer (191) with the other half (153) of the distribution or supply channel section (150), and the mixing device has a mixer (450) arranged between the first and second layers (192, 191), and the first and second layers (192, 191) are joined together.

## Revendications

1. Procédé de fabrication d'objets moulés par injection, en particulier des corps de brosses à dents ou des brosses à dents, par moulage par injection, dans lequel la matière à injecter est acheminée à partir d'un réservoir de stockage (3) à travers une unité d'injection (2), notamment au moyen d'une extrudeuse à vis ou d'un dispositif de transport similaire, à travers un système de canaux de distribution (4) avec des canaux de distribution ou d'alimentation, vers des cavités de moulage (5), et dans lequel au moins un adjuvant est ajouté à la matière à injecter, en aval de l'unité d'injection (2) par référence au sens du flux, **caractérisé en ce que** l'adjuvant est introduit directement à l'intérieur des canaux de distribution ou d'alimentation du système de canaux de distribution, dans au moins un répartiteur principal à canal (6) et/ou un répartiteur secondaire à canal (14) du système de canaux de distribution (4), raccordés à l'unité d'injection (2), et/ou dans une buse (7) raccordée à une cavité de moulage (5), et est ajouté à la matière à injecter, et **en ce que** la matière à injecter et l'adjuvant sont mélangés, par référence au sens du flux, en aval de l'embouchure d'un dispositif d'amenée d'adjuvant (10).

2. Procédé selon la revendication 1, **caractérisé en ce que** l'adjuvant, formé par une peinture (8), de préférence une peinture liquide, un granulat, de la poudre, des plaquettes métalliques, un matériau d'armature ou de renforcement, un agent de démoulage, des adjuvants à action chimique, tels que des produits moussants, des durcisseurs, des plastifiants ou des produits analogues, est amené séparément ou sous forme combinée.

3. Procédé selon la revendication 1 ou 2, **caractérisé en ce que** l'adjuvant (8) est introduit en plusieurs points du système de canaux de distribution (4).

4. Procédé selon l'une des revendications 1 à 3, **caractérisé en ce que** l'adjuvant (8) est ajouté en quantité dosée dans la matière à injecter.

5. Procédé selon l'une des revendications 1 à 4, **caractérisé en ce que** l'acheminement de l'adjuvant (8) est interrompu au cours de la phase de maintien en pression pendant le processus d'injection.

6. Procédé selon l'une des revendications 1 à 5, **caractérisé en ce que** l'adjuvant (8) est ajouté à la matière à injecter pratiquement à une température identique à celle de la matière à injecter.

7. Procédé de fabrication d'un système de canaux de distribution (4), en particulier un répartiteur à canal chaud (100), destiné à une presse d'injection, comprenant les étapes suivantes : préparation d'une première structure (192) avec une moitié (152) d'un tronçon du canal de distribution ou d'alimentation (150) ; préparation d'une deuxième structure (191) avec l'autre moitié (153) du tronçon du canal de distribution ou d'alimentation (150) ; préparation d'une unité de malaxage munie d'un mélangeur (450) ; mise en place du mélangeur (450) dans le canal de distribution ou d'alimentation (150), entre la première et la deuxième structure (192, 191) ; et assemblage de la première structure (192) avec la deuxième structure (191).

8. Presse d'injection destinée à la fabrication d'objets moulés par injection, en particulier des corps de brosses à dents, comprenant un moule d'injection (1), une unité d'injection (2), des cavités de moulage (5), un système de canaux de distribution (4) avec des canaux de distribution ou d'alimentation (150), dans lesquels est acheminée la matière à injecter entre l'unité d'injection (2) et les différentes cavités de moulage (5), et comprenant au moins une unité de malaxage (450) pour la matière à injecter, et comprenant au moins un branchement pour un dispositif d'amenée d'adjuvant, en particulier pour la mise en oeuvre du procédé selon une des revendications 1 à 7, **caractérisée en ce que** l'unité de malaxage et le dispositif d'amenée d'adjuvant sont intégrés dans le système de canaux de distribution (4, 4a, 100), **en ce que** l'unité de malaxage est une partie d'un canal de distribution ou d'alimentation (150) du système de canaux de distribution (4) et **en ce que** le/les dispositif(s) d'amenée d'adjuvant (8) est/sont raccordé(s) à un répartiteur principal à canal (6) raccordé à l'unité d'injection (2) et/ou à un répartiteur secondaire à canal (14) et/ou à une buse (7) débouchant dans une cavité de moulage.

9. Presse d'injection selon la revendication 8, **caractérisée en ce qu'**un dispositif d'amenée d'adjuvant (10) est prévu à la sortie d'une buse (7) débouchant dans une cavité de moulage et **en ce que**, dans ce cas, la conduite d'amenée est guidée dans le sens coaxial vers l'intérieur du canal de la buse et débouche au niveau de l'extrémité de sortie de la buse.

10. Presse d'injection selon la revendication 8 ou 9, **caractérisée en ce que** les conduites d'amenée (10) de l'adjuvant (8) peuvent être obturées, de préférence au moyen de vannes d'arrêt (15).

11. Presse d'injection selon l'une des revendications 8 à 10, **caractérisée en ce que** la vanne d'arrêt (15) est conçue sous forme de vanne de dosage de l'adjuvant (8).

12. Presse d'injection selon l'une des revendications 8 à 11, **caractérisée en ce qu'**en présence de plusieurs dispositifs d'amenée d'adjuvant (8), au moins l'un d'entre eux est relié directement à une cavité de moulage (5).

13. Presse d'injection selon l'une des revendications 8 à 12, **caractérisée en ce que** l'unité de malaxage comporte au moins une zone à section différente, de préférence une chambre de mélange (17) formée par un élargissement de la section.

14. Presse d'injection selon l'une des revendications 8 à 13, **caractérisée en ce qu'**il est prévu un répartiteur à canal chaud (100) destiné au traitement des matières en fusion (101), auxquelles à été mélangé au moins un adjuvant avant l'injection dans les cavités de moulage, lequel comporte un canal pour matières en fusion (150), dans lequel est prévu au moins un tronçon d'alimentation (151) pour l'aménage de l'adjuvant (102), au moins un canal pour adjuvant (200) qui débouche dans le tronçon d'alimentation (151) du canal pour matières en fusion (150), et au moins un mélangeur (300), disposé en aval dudit tronçon, par référence au sens du flux, et **en ce que** le mélangeur (300) est conçu sous forme de voie de malaxage, qui comporte au moins deux tronçons de voie (301, 302) dont les axes ne sont pas alignés l'un avec l'autre.

15. Presse d'injection selon la revendication 14, **caractérisée en ce que** le répartiteur à canal chaud (100) est conçu sous forme de répartiteur principal (140), qui est susceptible d'être relié à plusieurs répartiteurs secondaires (130) et dont le canal pour matières en fusion (150) se ramifie en plusieurs conduites guidées chacune vers un répartiteur secondaire (130), et le canal pour adjuvant (200) débouchant dans le tronçon d'alimentation (151), ainsi que le mélangeur (300) sont disposés, par référence au sens du flux, en aval de chaque ramification (131) vers un ou plusieurs répartiteurs secondaires (130).

16. Presse d'injection selon la revendication 14, **caractérisée en ce que** le répartiteur à canal chaud (100) est conçu sous forme de répartiteur secondaire (130), qui est susceptible d'être raccordé à plusieurs buses du canal chaud (160) et dont le canal pour matières en fusion (150) se ramifie en plusieurs conduites guidées chacune vers une buse de canal chaud (160), et le canal pour adjuvant (200) débouchant dans le tronçon d'alimentation (151), ainsi que le mélangeur (300) sont disposés, par référence au sens du flux, en aval de chaque ramification (161) vers les buses de canal chaud (160).

17. Presse d'injection selon la revendication 15 ou 16, **caractérisée en ce que**, en cas d'utilisation de plusieurs mélangeurs (300), la longueur et la section de chaque tronçon de malaxage sont identiques pour générer des conditions d'écoulement équilibrées.

18. Presse d'injection selon une des revendications 14 à 17, **caractérisée en ce que** l'orifice de sortie (303) d'un premier tronçon (301) des deux tronçons de voie (301, 302) communique avec l'orifice d'entrée (304) d'un deuxième tronçon (302) de ceux-ci, par l'intermédiaire d'une partie (305) du canal pour matières en fusion (150) faisant dévier le sens du flux, moyennant quoi les matières circulent à travers le premier tronçon (301) dans un sens qui est opposé au sens du flux dans le deuxième tronçon (302).

19. Presse d'injection selon la revendication 18, **caractérisée en ce que** l'orifice de sortie (303) du premier tronçon de voie (301) communique avec l'orifice d'entrée (304) du deuxième tronçon de voie (302) par une partie (305) du canal pour matières en fusion (150), qui forme une déviation à 180°, moyennant quoi les deux tronçons (301, 302) de la voie de malaxage sont disposés parallèlement l'un à l'autre.

20. Presse d'injection selon la revendication 19, **caractérisée en ce que** le répartiteur à canal chaud (100) est formé par au moins deux plans (170, 180) disposés horizontalement l'un au-dessus de l'autre, sachant que le premier tronçon de voie (301) est prévu dans le premier plan inférieur (170) et le deuxième tronçon de voie (302) est prévu dans le deuxième plan supérieur (180).

21. Presse d'injection selon la revendication 20, **caractérisée en ce que** le répartiteur de canal chaud (100) est divisé le long des deux plans (170, 180) en une structure inférieure, une structure médiane et une structure supérieure (190, 191, 192), sachant que dans chaque structure (190, 191, 192) sont prévues des gorges et sachant que, après l'assemblage brasé des structures (190, 191, 192) au moyen d'un procédé de diffusion sous vide, les gorges de respectivement deux structures adjacentes (190, 191) et (191, 192) forment une première et une deuxième moitié (152, 153) du canal pour matières en fusion (150).

22. Presse d'injection selon l'une des revendications précédentes, **caractérisé en ce que** le premier et le deuxième tronçon de voie (301, 302) sont conçus chacun sous forme de mélangeur statique (450).

23. Presse d'injection selon la revendication 22, **caractérisée en ce que** les deux mélangeurs statiques (450) sont insérés dans la moitié inférieure ou la moitié supérieure (152, 153) du canal pour matières en fusion (150) et sont, le cas échéant, soudés directement dans le canal pour matières en fusion (150).

24. Presse d'injection selon au moins l'une des revendications 22 et 23, **caractérisée en ce que** les deux mélangeurs statiques (450) comportent chacun plusieurs déflecteurs (451, 452) hélicoïdaux, qui sont disposés les uns derrière les autres en alternance avec un pas à droite et un pas à gauche, chaque déflecteur (451) étant muni de deux bords (453) orientés perpendiculairement au sens du flux, lesquels sont assemblés chacun avec le bord adjacent (454) du déflecteur (452) voisin et sont tordus selon un angle déterminé par rapport à ce bord (451).

25. Presse d'injection selon la revendication 24, **caractérisée en ce que** les bords (453, 454) assemblés les uns aux autres sont tordus l'un par rapport à l'autre selon un angle de 90° environ.

26. Presse d'injection selon la revendication 24 ou 25, **caractérisée en ce que** les bords adjacents (453, 454) de déflecteurs (451, 452) voisins sont assemblés les uns aux autres par un soudage par points.

27. Presse d'injection selon la revendication 14, **caractérisée en ce que**, dans le tronçon d'alimentation (151), une extrémité (201) du canal pour adjuvant (200) s'engage dans le sens coaxial dans le canal pour matières en fusion (150) et une fente annulaire (202) pour l'écoulement des matières en fusion est formée entre la paroi extérieure de l'extrémité et la paroi intérieure du canal pour matières en fusion (150).

28. Presse d'injection selon la revendication 27, **caractérisée en ce que** le diamètre de l'extrémité (201) du canal pour adjuvant (200) est inférieur au diamètre de la partie du canal pour adjuvant (200) située dans le prolongement de l'extrémité (201).

29. Presse d'injection selon la revendication 14, **caractérisée en ce que** le canal pour adjuvant (200) est relié à un réservoir et à une pompe haute pression, par laquelle l'adjuvant (102) à ajouter est pompé avec une pression suffisamment élevée hors du réservoir vers l'extrémité (201) du canal pour adjuvant (200) et ensuite vers le canal pour matières en fusion (150).

30. Presse d'injection selon la revendication 29, **caractérisée en ce que** la pression générée par la pompe haute pression est au moins aussi élevée que la pression régnant dans le canal pour matières en fusion (150) pendant le processus d'injection.

31. Presse d'injection selon la revendication 30, **caractérisée en ce que** la pression générée par la pompe haute pression se situe entre 1 000 bars et 1 500 bars.

32. Presse d'injection selon la revendication 29, **caractérisée en ce que**, pour le dosage de l'adjuvant (102), l'extrémité (201) du canal pour adjuvant (200) peut être obturée par une vanne à pointeau (203), qui peut être commandée par intermittence par un solénoïde (204) ou par une vanne magnétique.

33. Presse d'injection selon la revendication 32, **caractérisée en ce que** le solénoïde (204) actionne la vanne à pointeau (203) avec une fréquence de 30 à 100 cycles/sec.

34. Presse d'injection selon la revendication 32 ou 33, **caractérisée en ce que** la course de la vanne à pointeau (203) est limitée de 0,1 à 0,01 mm.

35. Presse d'injection selon l'une des revendications 8 à 34, **caractérisée en ce que**, à l'intérieur d'un canal de distribution, la distance entre l'embouchure d'un dispositif d'amenée d'adjuvant (10) et la cavité de moulage raccordée est définie en fonction du volume du produit moulé par injection et de la gamme d'adjuvant prévue à l'intérieur d'un corps de brosse à dents.

36. Presse d'injection selon l'une des revendications 8 à 35, **caractérisée en ce qu'**il est prévu pour l'adjuvant (8) une unité d'équilibrage de température, de préférence au moyen d'un insert de chauffage monté dans le dispositif d'amenée d'adjuvant (10).

37. Presse d'injection selon l'une des revendications 8 à 36, **caractérisée en ce qu'**une ou plusieurs branches du canal de distribution comportent chacune un ou plusieurs dispositifs d'amenée d'adjuvant (10).

38. Presse d'injection selon l'une des revendications 8 à 37, **caractérisée en ce que** plusieurs dispositifs d'amenée d'adjuvant (10) débouchent dans un canal guidé vers une cavité de moulage (5), le cas échéant, au niveau de la même zone dans le sens du flux et **en ce que** ces dispositifs d'amenée d'adjuvant (10) peuvent être obturés au choix.

39. Presse d'injection selon l'une des revendications 8 à 38, **caractérisée en ce que** l'embouchure du dispositif d'amenée d'adjuvant (10) est conçue sous forme de buse concentrique au niveau du canal de distribution.

40. Presse d'injection selon l'une des revendications 8 à 39, **caractérisée en ce que** le dispositif d'amenée d'adjuvant (10) comporte une conduite d'amenée (11), une unité de transport formée de préférence par une pompe (12), ainsi qu'un réservoir de stockage de l'adjuvant (13).

41. Presse d'injection selon l'une des revendications 8 à 40, **caractérisée en ce que** l'adjuvant est constitué par une peinture (8), de préférence une peinture liquide, un granulat, de la poudre, des plaquettes métalliques, un matériau d'armature ou de renforcement, un agent de démoulage, des adjuvants à action chimique, tels que des produits moussants, des durcisseurs, des plastifiants ou des produits analogues.

42. Presse d'injection selon l'une des revendications 8 à 41, **caractérisée en ce que** l'unité de malaxage comporte une première structure (192) avec une moitié (152) d'un tronçon du canal de distribution ou d'alimentation (150) et une deuxième structure (191) avec l'autre moitié (153) du tronçon du canal de distribution ou d'alimentation (150), et l'unité de malaxage comporte un mélangeur (450) disposé entre la première et la deuxième structure (192, 191), et la première structure (192) et la deuxième structure (191) sont assemblées l'une avec l'autre.
